# EUROPEAN PATENT APPLICATION

(11) **EP 4 815 158 A1**
(43) Date of publication of application: **30.09.2026**
(21) Application number: 24926653.7
(22) Date of filing: 14.08.2024
(51) Int. Cl.: H01M 50/342

(54) **HOUSING MANUFACTURING METHOD, HOUSING, BATTERY CELL, BATTERY, AND ELECTRIC DEVICE**

(30) Priority: 01.03.2024 CN 202410239007
(71) Applicant: Contemporary Amperex Technology Co., Limited, Ningde, Fujian 352100 (CN)
(72) Inventor: WU, Kai, Ningde, Fujian 352100 (CN); GU, Mingguang, Ningde, Fujian 352100 (CN); LI, Yao, Ningde, Fujian 352100 (CN); CHEN, Shilong, Ningde, Fujian 352100 (CN); LI, Quankun, Ningde, Fujian 352100 (CN); LIU, Sike, Ningde, Fujian 352100 (CN); CHEN, Weike, Ningde, Fujian 352100 (CN); LIU, Shuangxu, Ningde, Fujian 352100 (CN); GAN, Jiuqiang, Ningde, Fujian 352100 (CN); HUANG, Xiuxue, Ningde, Fujian 352100 (CN); SU, Fengsheng, Ningde, Fujian 352100 (CN)
(74) Representative: Lorenz Seidler Gossel Part. mbB
(86) International application number: PCT/CN2024/112133
(87) International publication number: WO 2025/179786

(57) **Abstract**

The present application relates to the field of batteries, and provides a method for manufacturing a shell body, a shell body, a battery cell, a battery, and an electric device. The method for manufacturing the shell body includes: providing a material plate; and processing the material plate to form a shell body. The shell body is provided with a pressure relief groove, and the shell body is capable of cracking along at least part of the pressure relief groove during pressure relief to release pressure inside the shell body. The shell body manufactured by the method for manufacturing the shell body is provided with the pressure relief groove, and when the internal pressure or temperature of the shell body reaches a burst pressure, the shell body is capable of cracking along at least part of the pressure relief groove, thereby releasing pressure inside the shell body. In the method for manufacturing the shell body, the pressure relief groove is directly formed on the shell body without welding, thereby avoiding liquid leakage caused by welding defects, and improving the service life of the battery cell.

## Description

### CROSS-REFERENCE TO RELATED APPLICATION

The present application claims priority to Chinese Patent Application (Application No. 202410239007.2), filed on March 01, 2024 and entitled "METHOD FOR MANUFACTURING SHELL BODY, SHELL BODY, BATTERY CELL, BATTERY, AND ELECTRIC DEVICE", the content of which is incorporated herein by reference in its entirety.

### TECHNICAL FIELD

The present application relates to the field of batteries, and in particular, to a method for manufacturing a shell body, a shell body, a battery cell, a battery, and an electric device.

### BACKGROUND

Batteries are widely used in the new energy field, such as in electric vehicles and new energy vehicles. New energy vehicles and electric vehicles have become a new trend in the development of the automobile industry. Battery technology advancement requires consideration of various design factors at the same time, such as energy density, discharge capacity, charging and discharging rate, and other performance parameters. In addition, the service life of batteries also needs to be considered. However, the service life of current batteries remains relatively short.

### SUMMARY

An objective of embodiments of the present application is to provide a method for manufacturing a shell body, a shell body, a battery cell, a battery, and an electric device, which aim to solve the problem of short battery service life in the related art.

In a first aspect, the embodiments of the present application provide a method for manufacturing a shell body. The method for manufacturing the shell body includes: providing a material plate; and processing the material plate to form a shell body, where the shell body is provided with a pressure relief groove, and the shell body is capable of cracking along at least part of the pressure relief groove during pressure relief to release pressure inside the shell body.

In the above technical solution, the shell body manufactured by the method for manufacturing the shell body is provided with a pressure relief groove, and when the internal pressure or temperature of the shell body reaches a burst pressure, the shell body is capable of cracking along at least part of the pressure relief groove, thereby releasing pressure inside the shell body. In the method for manufacturing the shell body, the pressure relief groove is directly formed on the shell body without welding, which avoids liquid leakage caused by welding defects and is beneficial to improving the service life of the battery cell.

As an optional technical solution of the embodiments of the present application, the pressure relief groove includes a first groove. Processing the material plate to form the shell body includes: processing the material plate to form a preformed shell body provided with an accommodating space; and machining the first groove on the preformed shell body.

In the above technical solution, the residual thickness of the shell body at a position where the first groove is located is the smallest. During pressure relief, the shell body is most prone to cracking from the position where the first groove is located, to release pressure inside the shell body. When the shell body is manufactured, the material plate is first processed to form the preformed shell body with the accommodating space, and then the first groove is machined on the preformed shell body, thereby avoiding the impact of the processing of the shell body on the precision of the first groove, such that the first groove exhibits a relatively high precision. When the battery cell undergoes thermal runaway, the first groove is capable of cracking in time for pressure relief, which is beneficial to improving the reliability of the battery cell.

As an optional technical solution of the embodiments of the present application, the pressure relief groove further includes a second groove. Processing the material plate to form the shell body further includes: machining the second groove. Machining the first groove on the preformed shell body includes: machining the first groove on a groove bottom surface of the second groove.

In the above technical solution, the pressure relief groove includes the first groove and the second groove, and the first groove is disposed on the groove bottom surface of the second groove. In this case, the pressure relief groove is a multi-level groove. During processing, the second groove is machined first, and finally the first groove is machined on the groove bottom surface of the second groove. Processing the first groove is the last step in the manufacturing of the entire shell body, and the precision of the first groove is not easily affected by other processing steps, such that the first groove exhibits a relatively high precision. When the battery cell undergoes thermal runaway, the first groove is capable of cracking in time for pressure relief, which is beneficial to improving the reliability of the battery cell. By processing the first groove and the second groove separately, it is beneficial to reducing the forming force applied during one processing, and it is beneficial to reducing the risk that the material plate or the preformed shell body is damaged during the processing. In addition, when the first groove is processed, the second groove can also play a buffering role to a certain extent, such that the preformed shell body is not easily deformed due to factors such as local material extrusion during the process of processing the first groove, which is beneficial to improving the yield of the shell body, thereby improving the service life and reliability of the battery cell.

As an optional technical solution of the embodiments of the present application, machining the first groove on the groove bottom surface of the second groove includes: machining a multi-level groove on the groove bottom surface of the second groove in a level-by-level manner to form the first groove on the groove bottom surface of the second groove.

In the above technical solution, the first groove is a multi-level groove. By machining the multi-level groove on the groove bottom surface of the second groove in a level-by-level manner to form the first groove, it is beneficial to reducing the forming force applied during one processing, and it is beneficial to reducing the risk that the preformed shell body is damaged during the processing.

As an optional technical solution of the embodiments of the present application, machining the first groove on the groove bottom surface of the second groove includes: machining a multi-level groove on the groove bottom surface of the second groove simultaneously to form the first groove on the groove bottom surface of the second groove.

In the above technical solution, the first groove is a multi-level groove. By machining the multi-level groove on the groove bottom surface of the second groove simultaneously to form the first groove, it is beneficial to reducing production processes, reduce processing equipment, and lower processing costs.

As an optional technical solution of the embodiments of the present application, after processing the material plate to form the preformed shell body provided with the accommodating space, the second groove is machined on the preformed shell body.

In the above technical solution, when the shell body is manufactured, the material plate is first processed to form the preformed shell body with the accommodating space, then the second groove is machined on the preformed shell body, and finally the first groove is machined on the groove bottom surface of the second groove, thereby avoiding the impact of the processing of the shell body on the precision of the second groove and the first groove, such that the pressure relief groove exhibits a relatively high precision. When the battery cell undergoes thermal runaway, the pressure relief groove is capable of cracking in time for pressure relief, which is beneficial to improving the reliability of the battery cell.

As an optional technical solution of the embodiments of the present application, before processing the material plate to form the preformed shell body provided with the accommodating space, the second groove is machined on the material plate.

In the above technical solution, when the shell body is manufactured, the second groove is first machined on the material plate, and then the material plate is processed to form the preformed shell body. The preformed shell body is not easily affected by the processing of the second groove, and the processed preformed shell body has a regular shape and a flat surface, which is beneficial to improving the processing precision of the preformed shell body.

As an optional technical solution of the embodiments of the present application, during a process of processing the material plate to form the preformed shell body provided with the accommodating space, the second groove is machined.

In the above technical solution, during the process of processing the material plate to form the preformed shell body, machining the second groove is beneficial to reducing the impact of the processing of the second groove on the preformed shell body, such that the preformed shell body exhibits a relatively high precision. In addition, during the process of processing the material plate to form the preformed shell body, the second groove is machined, and the impact of the processing of the preformed shell body on the second groove is also relatively small, which can improve the precision of the second groove. In short, during the process of processing the material plate to form the preformed shell body, machining the second groove can take into account the precision of the preformed shell body and the precision of the second groove.

As an optional technical solution of the embodiments of the present application, a volume of the second groove is greater than a volume of the first groove.

In the above technical solution, by making the volume of the second groove greater than the volume of the first groove, the second groove can play a better buffering role during the process of processing the first groove, thereby reducing the risk of deformation of the preformed shell body due to factors such as local material extrusion, which is beneficial to improving the yield of the shell body, thereby improving the service life and reliability of the battery cell.

As an optional technical solution of the embodiments of the present application, machining the second groove includes: machining a multi-level groove to form the second groove. Machining the first groove on the groove bottom surface of the second groove includes: machining the first groove on a groove bottom surface of one level of the groove farthest away from a groove opening of the second groove.

In the above technical solution, the second groove is a multi-level groove, and the first groove is formed on the groove bottom surface of the level of the groove farthest away from the groove opening of the second groove. In this way, the second groove can provide a larger buffer space, thereby reducing the risk of deformation of the preformed shell body due to factors such as local material extrusion during the process of processing the first groove, which is beneficial to improving the yield of the shell body, thereby improving the service life and reliability of the battery cell.

As an optional technical solution of the embodiments of the present application, machining the second groove includes: stamping the second groove.

In the above technical solution, forming the second groove by stamping is simple and convenient. In addition, in the case that the second groove is processed by stamping, a groove wall of the second groove may undergo cold work hardening (where the grain arrangement changes, leading to lattice distortion and deformation, reducing metal plasticity, and increasing material hardness). This enhances the ability of the second groove to resist an external impact, and the second groove is not easily damaged by the external impact. In this way, it is beneficial to reducing the risk of liquid leakage of the battery cell and improving the service life of the battery cell.

As an optional technical solution of the embodiments of the present application, before machining the first groove on the groove bottom surface of the second groove, processing the material plate to form the shell body further includes: machining a third groove, where the third groove and the pressure relief groove define a predetermined pressure relief zone, and the third groove is configured to guide the predetermined pressure relief zone to at least partially flip open.

In the above technical solution, during the pressure relief of the battery cell, the pressure relief groove cracks, allowing the fluid medium in the battery cell to flow out for pressure relief. By providing the third groove, the strength of the shell body at the position of the third groove is weakened, such that the predetermined pressure relief zone flips open more easily under the action of the fluid medium. This not only can improve the probability of opening the predetermined pressure relief zone, but also can improve the opening speed of the predetermined pressure relief zone, thereby achieving rapid pressure relief, and reducing the risk of explosion and fire in the battery cell, which is beneficial to improving the reliability of the battery cell.

As an optional technical solution of the embodiments of the present application, before machining the third groove, the second groove is machined.

In the above technical solution, during processing, the second groove is machined first, and then the third groove is machined. The second groove can play a buffering role to a certain extent, and absorb the deformation of the material plate caused by processing the third groove.

As an optional technical solution of the embodiments of the present application, before machining the second groove, the third groove is machined.

In the above technical solution, before processing the second groove, the third groove is machined first, and the third groove can play a buffering role and absorb the deformation caused by processing the second groove, such that the material plate or the preformed shell body is not easily deformed greatly due to factors such as local material extrusion during the process of processing the second groove, which is beneficial to improving the yield of the shell body, thereby improving the service life and reliability of the battery cell.

As an optional technical solution of the embodiments of the present application, the second groove and the third groove are simultaneously machined.

In the above technical solution, by machining the second groove and the third groove simultaneously, the processing of the first groove and the processing of the third groove are not easily affected by each other, and the number of stations required for processing can be reduced, which is beneficial to improving the production efficiency.

As an optional technical solution of the embodiments of the present application, machining the third groove includes: machining two third grooves, such that the second groove is located between the two third grooves.

In the above technical solution, by machining the two third grooves, each third groove may correspond to at least one predetermined pressure relief zone. During the pressure relief of the battery cell, each predetermined pressure relief zone flips open under the guidance of its corresponding third groove, such that the battery cell has a larger pressure relief area, which is beneficial to improving the pressure relief rate of the battery cell and improving the reliability of the battery cell. In addition, during the subsequent process of processing the first groove, both the two third grooves can play a buffering role to a certain extent, and absorb the deformation of the shell body caused by processing the first groove, which is beneficial to improving the precision of the shell body and is beneficial to improving the reliability of the battery cell.

As an optional technical solution of the embodiments of the present application, the second groove and the third groove are machined on two surfaces disposed opposite to each other, respectively.

In the above technical solution, by providing the second groove and the third groove on two surfaces disposed opposite to each other, respectively, the second groove and the third groove are located on two sides of the material plate or the first wall of the preformed shell body, respectively, thereby facilitating the processing of the second groove and the processing of the third groove on the two sides of the material plate or the first wall of the preformed shell body, respectively, which is beneficial to reducing the mutual influence between the second groove and the third groove during the processing.

As an optional technical solution of the embodiments of the present application, the second groove and the third groove are machined on a same surface.

In the above technical solution, the second groove and the third groove are disposed on the same surface, and the second groove and the third groove can be machined at one time during processing, reducing the number of movements of the material plate, which is beneficial to simplifying manufacturing.

As an optional technical solution of the embodiments of the present application, before machining the first groove on the preformed shell body, processing the material plate to form the shell body further includes: machining a third groove, where the third groove and the pressure relief groove define a predetermined pressure relief zone, and the third groove is configured to guide the predetermined pressure relief zone to at least partially flip open.

In the above technical solution, during the pressure relief of the battery cell, the pressure relief groove cracks, allowing the fluid medium in the battery cell to flow out for pressure relief. By providing the third groove, the strength of the shell body at the position of the third groove is weakened, such that the predetermined pressure relief zone flips open more easily under the action of the fluid medium. This not only can improve the probability of opening the predetermined pressure relief zone, but also can improve the opening speed of the predetermined pressure relief zone, thereby achieving rapid pressure relief, and reducing the risk of explosion and fire in the battery cell, which is beneficial to improving the reliability of the battery cell.

As an optional technical solution of the embodiments of the present application, before processing the material plate to form the preformed shell body provided with the accommodating space, a third groove is machined on the material plate.

In the above technical solution, when the shell body is manufactured, the third groove is first machined on the material plate, and then the material plate is processed to form the preformed shell body. The preformed shell body is not easily affected by the processing of the third groove, and the processed preformed shell body has a regular shape and a flat surface, which is beneficial to improving the processing precision of the preformed shell body.

As an optional technical solution of the embodiments of the present application, after processing the material plate to form the preformed shell body provided with the accommodating space, a third groove is machined on the preformed shell body.

In the above technical solution, when the shell body is manufactured, the material plate is first processed to form the preformed shell body with the accommodating space, and then the third groove is machined on the preformed shell body, thereby avoiding the impact of the processing of the shell body on the precision of the third groove, which is beneficial to improving the guiding effect of the third groove on the flipping of the predetermined pressure relief zone during the pressure relief of the battery cell.

As an optional technical solution of the embodiments of the present application, during a process of processing the material plate to form the preformed shell body provided with the accommodating space, the third groove is machined.

In the above technical solution, during the process of processing the material plate to form the preformed shell body, machining the third groove is beneficial to reducing the impact of the processing of the third groove on the preformed shell body, such that the preformed shell body exhibits a relatively high precision. In addition, during the process of processing the material plate to form the preformed shell body, the third groove is machined, and the impact of the processing of the preformed shell body on the third groove is also relatively small, which can improve the precision of the third groove. In short, during the process of processing the material plate to form the preformed shell body, machining the third groove can take into account the precision of the preformed shell body and the precision of the third groove.

As an optional technical solution of the embodiments of the present application, machining the third groove includes: stamping the third groove.

In the above technical solution, forming the third groove by stamping is simple and convenient. In addition, in the case that the third groove is processed by stamping, a groove wall of the third groove may undergo cold work hardening (where the grain arrangement changes, leading to lattice distortion and deformation, reducing metal plasticity, and increasing material hardness). This enhances the ability of the third groove to resist an external impact, and the third groove is not easily damaged by the external impact. In this way, it is beneficial to reducing the risk of liquid leakage of the battery cell and improving the service life of the battery cell.

As an optional technical solution of the embodiments of the present application, a volume of the third groove is greater than a volume of the first groove.

In the above technical solution, by making the volume of the third groove greater than the volume of the first groove, the third groove can play a better buffering role during the process of processing the first groove, and absorb the deformation of the preformed shell body caused by processing the first groove, thereby reducing the risk of deformation of the preformed shell body due to factors such as local material extrusion, which is beneficial to improving the yield of the shell body, thereby improving the service life and reliability of the battery cell.

As an optional technical solution of the embodiments of the present application, before machining the first groove on the preformed shell body, processing the material plate to form the shell body further includes: sleeving the preformed shell body over a positioning member with an opening of the preformed shell body facing downward, to position the preformed shell body. Machining the first groove on the preformed shell body includes: machining the first groove on a first wall, opposite to the opening, of the preformed shell body.

In the above technical solution, during processing, the preformed shell body is sleeved over the positioning member with the opening of the preformed shell body facing downward, to achieve the quick positioning of the preformed shell body, thereby facilitating the processing of the first groove on the first wall, opposite to the opening, of the preformed shell body, and reducing the risk of shift of the preformed shell body during the processing, which is beneficial to improving the processing precision of the first groove.

As an optional technical solution of the embodiments of the present application, before machining the first groove on the preformed shell body, processing the material plate to form the shell body further includes: clamping the preformed shell body by a clamp with an opening of the preformed shell body facing upward. Machining the first groove on the preformed shell body includes: machining the first groove on a first wall, opposite to the opening, of the preformed shell body.

In the above technical solution, during processing, the preformed shell body is clamped by the clamp, such that the opening of the preformed shell body faces upward, to achieve the positioning of the preformed shell body, thereby facilitating the processing of the first groove on the first wall, opposite to the opening, of the preformed shell body, and reducing the risk of shift of the preformed shell body during the processing, which is beneficial to improving the processing precision of the first groove.

As an optional technical solution of the embodiments of the present application, machining the first groove on the preformed shell body includes: stamping the first groove on the preformed shell body.

In the above technical solution, forming the first groove by stamping is simple and convenient. In addition, in the case that the first groove is processed by stamping, a groove wall of the first groove may undergo cold work hardening (where the grain arrangement changes, leading to lattice distortion and deformation, reducing metal plasticity, and increasing material hardness). This enhances the ability of the first groove to resist an external impact, and the first groove is not easily damaged by the external impact. In this way, it is beneficial to reducing the risk of liquid leakage of the battery cell.

As an optional technical solution of the embodiments of the present application, processing the material plate to form the preformed shell body provided with the accommodating space includes: stretching the material plate to form the preformed shell body provided with the accommodating space.

In the above technical solution, processing the material plate to form the preformed shell body by stretching is simple in direction, low-cost, and easy to operate.

As an optional technical solution of the embodiments of the present application, before processing the material plate to form the shell body, the method for manufacturing the shell body further includes: machining the pressure relief groove on the material plate.

In the above technical solution, the pressure relief groove is first machined on the material plate, and then the material plate processed with the pressure relief groove is processed to form the shell body. In this way, the impact of processing the pressure relief groove on the shell body can be avoided, such that the shell body exhibits a relatively high precision, and the shell body has a regular shape and a flat surface, which is beneficial to improving the service life of the battery cell.

As an optional technical solution of the embodiments of the present application, the material plate is of an elliptical structure.

In the above technical solution, the material plate is of an elliptical structure, and in this way, it is more material-saving when the material plate is processed to form the shell body.

In a second aspect, the embodiments of the present application further provide a shell body. The shell body is manufactured according to the above method for manufacturing the shell body.

As an optional technical solution of the embodiments of the present application, the shell body is provided with a first wall and a second wall connected to each other, the pressure relief groove is disposed on the first wall, and the second wall is located on one side of the first wall in a first direction; the first wall is further provided with a third groove, in the first direction, the second wall is provided with a first outer surface facing away from an interior of the shell body, and the third groove is located between the first outer surface and the pressure relief groove.

In the above technical solution, the shell is provided with a first wall and a second wall connected to each other, and the first wall is provided with a pressure relief groove, such that during the pressure relief of the battery cell, the first wall is capable of cracking along the pressure relief groove to release the internal pressure of the battery cell, where the first wall is further provided with a third groove, the third groove is located between the pressure relief groove and the first outer surface in the first direction, and the third groove can play a certain separation role. In one aspect, the third groove can absorb the excess material extruded from the pressure relief groove during the forming process of the pressure relief groove, so as to mitigate the occurrence of local arching of the first outer surface of the second wall or the local arching of the first wall caused by local material extrusion during the process of processing the pressure relief groove on the first wall. Therefore, problems such as an increase in the local dimension of the battery cell in the first direction or a decrease in the flatness of the first wall can be reduced, thereby improving the dimensional consistency of the shell body, which is beneficial to improving the production quality of the battery cell. In another aspect, when the battery cell is subjected to acting forces of internal and external impacts and deformed, the deformation energy of the battery cell can also be absorbed by the third groove, such that the third groove can play a buffering role between the pressure relief groove and the second wall, so as to protect the zone of the first wall provided with the pressure relief groove to a certain extent. Therefore, phenomena such as deformation or damage in the zone of the first wall provided with the pressure relief groove can be effectively reduced when the battery cell is subjected to acting forces of internal and external impacts, thereby mitigating the situation of pre-actuation and pressure relief of the battery cell during use, which is beneficial to improving the use reliability and service life of the battery cell.

As an optional technical solution of the embodiments of the present application, the third groove and the pressure relief groove define a predetermined pressure relief zone, and the third groove is configured to guide the predetermined pressure relief zone to at least partially flip open.

In the above technical solution, by providing the third groove, the strength of the first wall at the position of the third groove is weakened, such that the predetermined pressure relief zone flips open more easily under the action of the fluid medium. This not only can improve the probability of opening the predetermined pressure relief zone, but also can improve the opening speed of the predetermined pressure relief zone, thereby achieving rapid pressure relief, and reducing the risk of explosion and fire in the battery cell, which is beneficial to improving the reliability of the battery cell.

As an optional technical solution of the embodiments of the present application, the pressure relief groove and the third groove are located on two surfaces, disposed opposite to each other, of the first wall, respectively.

In the above technical solution, by providing the pressure relief groove and the third groove on two surfaces, disposed opposite to each other, of the first wall, respectively, the pressure relief groove and the third groove are located on two sides of the first wall, respectively, thereby facilitating the processing of the pressure relief groove and the processing of the third groove on the two sides of the first wall, respectively, which is beneficial to reducing the mutual influence between the pressure relief groove and the third groove during the processing.

As an optional technical solution of the embodiments of the present application, in the first direction, the pressure relief groove at least partially overlaps with a projection of the third groove.

In the above technical solution, by arranging the pressure relief groove and the projection, disposed in the first direction, of the third groove to at least partially overlap, the pressure relief groove and the third groove are provided with an overlapping zone in the first direction. Therefore, in one aspect, the absorption effect of the third groove on the excess material can be improved, thereby reducing the phenomenon of an increase in the local dimension of the battery cell or the poor flatness of the first wall caused by local material extrusion during the process of processing the pressure relief groove on the first wall of the shell body. In another aspect, when the battery cell is subjected to acting forces of internal and external impacts and deformed, the absorption effect of the pressure relief groove on the deformation energy of the battery cell can be improved, thereby improving the buffering effect of the third groove between the pressure relief groove and the second wall. Therefore, phenomena such as deformation or damage in the zone of the first wall provided with the pressure relief groove can be effectively reduced when the battery cell is subjected to acting forces of internal and external impacts.

As an optional technical solution of the embodiments of the present application, two ends of an extension direction of a projection of the third groove in a thickness direction of the first wall extend beyond two ends of the pressure relief groove, respectively.

In the above technical solution, by making two ends of the extension direction of the projection of the third groove in the thickness direction of the first wall extend beyond two ends of the pressure relief groove, respectively, the separation effect of the third groove between the pressure relief groove and the second wall can be improved, thereby improving the absorption effect of the third groove on the excess material extruded during the forming process of the pressure relief groove, and improving the blocking effect of the third groove on the deformation energy of the battery cell when the battery cell is subjected to acting forces of internal and external impacts.

As an optional technical solution of the embodiments of the present application, the pressure relief groove includes a plurality of groove segments, the plurality of groove segments are connected, and the plurality of groove segments and the third groove jointly define at least one predetermined pressure relief zone.

In the above technical solution, the plurality of groove segments and the third groove jointly define the predetermined pressure relief zone, and the first wall is capable of cracking along the plurality of groove segments during the pressure relief of the battery cell, thereby opening the predetermined pressure relief zone to release the internal pressure of the battery cell. Moreover, the connection position of two groove segments is weaker, and is more prone to cracking and opening the predetermined pressure relief zone for pressure relief, thereby further improving the pressure relief area and pressure relief rate of the battery cell.

As an optional technical solution of the embodiments of the present application, the plurality of groove segments include a first groove segment, a second groove segment, and a third groove segment, the first groove segment and the third groove segment are disposed opposite to each other, the second groove segment connects the first groove segment and the third groove segment, and the first groove segment, the second groove segment, the third groove segment, and the third groove jointly define at least one predetermined pressure relief zone.

In the above technical solution, the plurality of groove segments include a first groove segment, a second groove segment, and a third groove segment, and the second groove segment connects the first groove segment and the third groove segment, such that the first wall is capable of cracking along the first groove segment, the second groove segment, and the third groove segment during the pressure relief of the battery cell, thereby opening the predetermined pressure relief zone to release the internal pressure of the battery cell. The connection position of the first groove segment and the second groove segment as well as the connection position of the first groove segment and the third groove segment are weaker, and are more prone to cracking and opening the predetermined pressure relief zone for pressure relief, thereby further improving the pressure relief area and pressure relief rate of the battery cell.

As an optional technical solution of the embodiments of the present application, a connection position of the first groove segment and the second groove segment is offset from two ends of the first groove segment, and a connection position of the third groove segment and the second groove segment is offset from two ends of the third groove segment, such that the predetermined pressure relief zone is formed on two sides of the second groove segment.

In the above technical solution, by arranging the connection position of the first groove segment and the second groove segment to be located between two ends of the first groove segment, and arranging the connection position of the third groove segment and the second groove segment to be located between two ends of the third groove segment, the first groove segment, the second groove segment, and the third groove segment form a structure similar to an "H" shape, such that the predetermined pressure relief zone can be formed on two sides of the second groove segment of the pressure relief groove, and two predetermined pressure relief zones can be opened in a symmetrical manner for pressure relief during the pressure relief of the battery cell, which is beneficial to further increasing the pressure relief effect of the battery cell, thereby effectively improving the pressure relief rate of the battery cell.

In a third aspect, the embodiments of the present application further provide a battery cell. The battery cell includes the above shell body.

In a fourth aspect, the embodiments of the present application further provide a battery. The battery includes the above battery cell.

In a fifth aspect, the embodiments of the present application further provide an electric device. The electric device includes the above battery cell.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of the structure of a battery according to some embodiments of the present application;
FIG. 3 is a schematic structural diagram of a battery cell according to some embodiments of the present application;
FIG. 4 is an exploded view of the structure of a battery cell according to some embodiments of the present application;
FIG. 5 is a schematic block diagram of a method for manufacturing a shell body according to some embodiments of the present application;
FIG. 6 is a schematic block diagram of a method for manufacturing a shell body according to some other embodiments of the present application;
FIG. 7 is a schematic block diagram of a method for manufacturing a shell body according to still some other embodiments of the present application;
FIG. 8 is a schematic block diagram of a method for manufacturing a shell body according to also some other embodiments of the present application;
FIG. 9 is a schematic block diagram of a method for manufacturing a shell body according to yet some other embodiments of the present application;
FIG. 10 is a schematic block diagram of a method for manufacturing a shell body according to further still some other embodiments of the present application;
FIG. 11 is a schematic block diagram of a method for manufacturing a shell body according to further also some other embodiments of the present application;
FIG. 12 is a schematic structural diagram of a material plate according to some embodiments of the present application;
FIG. 13 is a schematic structural diagram of a material plate (processed with a second groove) according to some embodiments of the present application;
FIG. 14 is a schematic structural diagram of a preformed shell body according to some embodiments of the present application;
FIG. 15 is a schematic structural diagram of the back of a shell body according to some embodiments of the present application;
FIG. 16 is a schematic block diagram of a method for manufacturing a shell body according to further yet some other embodiments of the present application;
FIG. 17 is a schematic block diagram of a method for manufacturing a shell body according to still also some other embodiments of the present application;
FIG. 18 is a schematic block diagram of a method for manufacturing a shell body according to also yet some other embodiments of the present application;
FIG. 19 is a schematic structural diagram of a material plate (processed with a third groove) according to some embodiments of the present application;
FIG. 20 is a schematic structural diagram of a material plate (processed with a second groove and a third groove) according to some embodiments of the present application;
FIG. 21 is a schematic structural diagram of a preformed shell body (processed with a second groove and a third groove) according to some embodiments of the present application;
FIG. 22 is a schematic structural diagram of a shell body (processed with a first groove, a second groove, and a third groove) according to some embodiments of the present application;
FIG. 23 is a schematic block diagram of a method for manufacturing a shell body according to yet also some other embodiments of the present application;
FIG. 24 is a schematic block diagram of a method for manufacturing a shell body according to also still some other embodiments of the present application;
FIG. 25 is a schematic block diagram of a method for manufacturing a shell body according to yet further some other embodiments of the present application;
FIG. 26 is a schematic block diagram of a method for manufacturing a shell body according to also further some other embodiments of the present application;
FIG. 27 is a schematic block diagram of a method for manufacturing a shell body according to still further some other embodiments of the present application;
FIG. 28 is a schematic block diagram of a method for manufacturing a shell body according to further yet still some other embodiments of the present application;
FIG. 29 is a schematic block diagram of a method for manufacturing a shell body according to further still yet some other embodiments of the present application;
FIG. 30 is a schematic structural diagram of the front of a shell body according to some embodiments of the present application;
FIG. 31 is a schematic bottom view of a shell body according to some embodiments of the present application; and
FIG. 32 is a cross-sectional view of a shell body according to some embodiments of the present application.

Reference numerals: 1000-vehicle; 100-battery; 10-case; 11-first case body; 12-second case body; 20-battery cell; 21-shell; 211-first wall; 2111-pressure relief groove; 2111a-first groove segment; 2111b-second groove segment; 2111c-third groove segment; 21111-second groove; 21112-first groove; 2112-third groove; 2113-predetermined pressure relief zone; 212-second wall; 2121-first outer surface; 215-shell body; 2151-opening; 2152-preformed shell body; 216-end cover; 22-electrode assembly; 221-tab; 23-electrode terminal; 24-current collecting member; 30-method for manufacturing a shell body; 31-material plate; 200-controller; 300-motor.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead storage battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, a foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in a combination of two or more.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The separation film may be of various types, and any porous-structure separation film known to have good chemical stability and mechanical stability may be selected and used.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, the materials of the layers may be the same or different. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes, but is not limited to, a square-shell battery cell, a blade-shaped battery cell, and a polygonal prismatic battery, and the polygonal prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

In some embodiments, the battery may be an energy storage device. The energy storage device includes an energy storage container, an energy storage electrical cabinet, and the like.

Batteries are widely used in the new energy field, such as in electric vehicles and new energy vehicles. New energy vehicles and electric vehicles have become a new trend in the development of the automobile industry. Battery technology advancement requires consideration of various design factors at the same time, such as reliability, energy density, discharge capacity, charging and discharging rate, and other performance parameters. In addition, the service life of batteries also needs to be considered. However, the service life of current batteries remains relatively short.

For a battery cell, in order to improve the safety of the battery cell, in the prior art, a pressure relief mechanism is welded on an end cover of the battery cell, and the pressure relief mechanism is provided with a score groove. When the internal pressure of the battery cell reaches a burst pressure, the score groove cracks to release pressure inside the battery cell, thereby reducing the risk of explosion and fire in the battery cell.

However, welding the pressure relief mechanism to the end cover is prone to welding defects, and the electrolytic solution in the battery cell is prone to liquid leakage from the defect position. In addition, when the pressure relief mechanism is welded to the end cover, the high temperature generated by welding will affect the score groove, and the welding will cause the material to expand with heat and contract with cold, pulling the score groove, resulting in a reduction in the service life of the pressure relief mechanism. Moreover, it is easy to open the pressure relief mechanism under the action of the electrolytic solution, resulting in liquid leakage.

In view of this, the embodiments of the present application provide a method for manufacturing a shell body. The method for manufacturing the shell body includes: providing a material plate; and processing the material plate to form a shell body. The shell body is provided with a pressure relief groove, and the shell body is capable of cracking along at least part of the pressure relief groove during pressure relief to release pressure inside the shell body.

The shell body manufactured by the method for manufacturing the shell body is provided with a pressure relief groove, and when the internal pressure or temperature of the shell body reaches a burst pressure, the shell body is capable of cracking along at least part of the pressure relief groove, thereby releasing pressure inside the shell body. In the method for manufacturing the shell body, the pressure relief groove is directly formed on the shell body without welding, which avoids liquid leakage caused by welding defects and is beneficial to improving the service life of the battery cell.

The technical solutions described in the embodiments of the present application are applicable to the manufacturing of a shell body, the shell body can be used for a battery cell, and the battery cell made using the shell body manufactured by the method for manufacturing the shell body has a longer service life.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of description, the following embodiments are illustrated by taking a vehicle as an example of the electric device according to an embodiment of the present application.

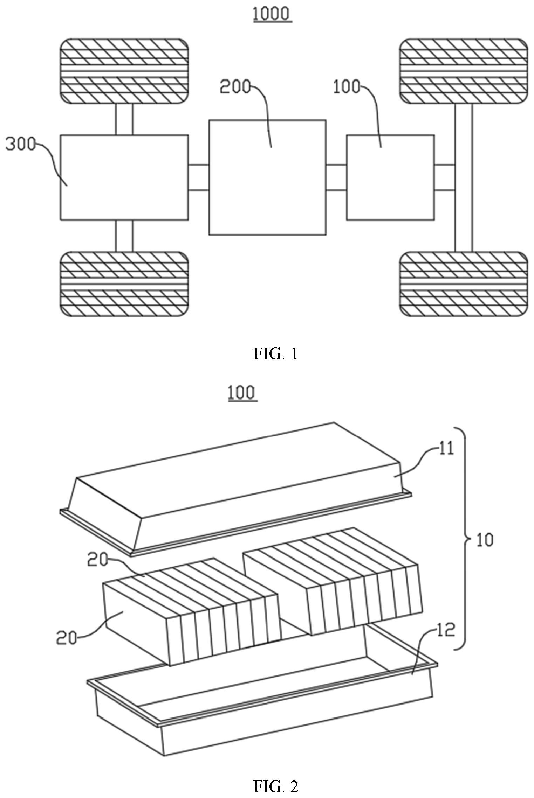

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000. The battery 100 may be disposed at the bottom of the vehicle 1000, or may be disposed at the head of the vehicle 1000, or may be disposed at the tail of the vehicle 1000. The battery 100 may be configured to power the vehicle 1000. For example, the battery 100 may serve as an operation power source or service power source for the vehicle 1000. The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as an operation power source or service power source for the vehicle 1000, but also as a driving power source for the vehicle 1000 to, replacing or partially replacing fuel or natural gas, provide driving power for the vehicle 1000.

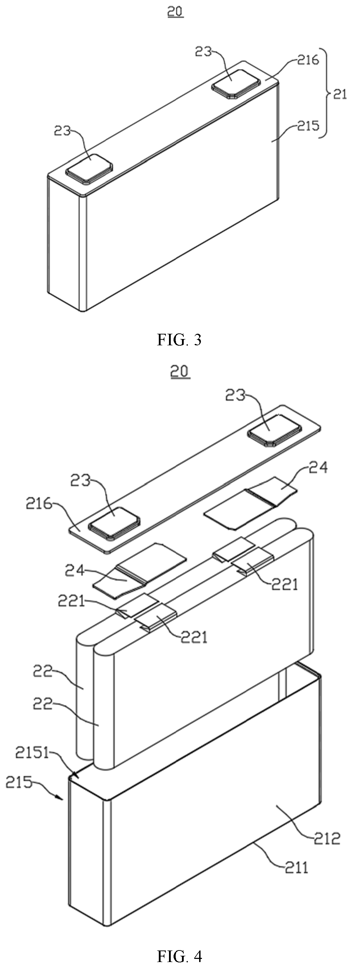

Referring to FIGs. 2 and 3, FIG. 2 is an exploded view of the structure of a battery 100 according to some embodiments of the present application, and FIG. 3 is a schematic structural diagram of a battery cell 20 according to some embodiments of the present application. The battery 100 includes a case 10 and a battery cell 20. The battery cell 20 is configured to be accommodated in the case 10.

The case 10 is configured to provide an assembly space for the battery cell 20, and the case 10 may be of various structures. In some embodiments, the case 10 may include a first case body 11 and a second case body 12. The first case body 11 and the second case body 12 are mutually lidded with each other. The first case body 11 and the second case body 12 jointly define an assembly space for accommodating the battery cell 20. The second case body 12 may be of a hollow structure with one end open, and the first case body 11 may be of a plate-shaped structure. The first case body 11 lids the open side of the second case body 12, such that the first case body 11 and the second case body 12 jointly define an assembly space; the first case body 11 and the second case body 12 may also both be of a hollow structure with one side open, and the open side of the first case body 11 lids the open side of the second case body 12.

Certainly, the case 10 formed by the first case body 11 and the second case body 12 may be in various shapes, such as a cylinder, a rectangular parallelepiped, or a cube. Illustratively, in FIG. 2, the case 10 is in the shape of a rectangular parallelepiped.

In the battery 100, one or a plurality of battery cells 20 disposed in the case 10 may be provided. If a plurality of battery cells 20 disposed in the case 10 are provided, the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole, the whole being accommodated in the case 10.

In some embodiments, the battery 100 may further include other structures. For example, the battery 100 may further include a busbar component, and the busbar component is configured to connect the plurality of battery cells 20 to achieve an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be in the shape of a rectangular parallelepiped, a cylinder, a prism, or other shapes. Illustratively, in FIG. 3, the battery cell 20 is of a rectangular parallelepiped structure.

The battery cell 20 refers to the smallest unit forming a battery 100. Referring to FIGs. 3 and 4, FIG. 3 is a schematic structural diagram of a battery cell 20 according to some embodiments of the present application. FIG. 4 is an exploded view of the structure of a battery cell 20 according to some embodiments of the present application. The battery cell 20 includes an end cover 216, a shell body 215, and an electrode assembly 22. The shell body 215 is provided with an accommodating space having an opening 2151 at one end, the accommodating space is configured to accommodate the electrode assembly 22, and the end cover 216 is connected to the shell body 215 and closes the opening 2151.

The end cover 216 refers to a component that lids the opening 2151 of the shell body 215 to isolate the internal environment of the battery cell 20 from the external environment. Without limitation, the shape of the end cover 216 may be adapted to the shape of the shell body 215 to match the shell body 215. Optionally, the end cover 216 may be made of a material with a certain hardness and strength (for example, an aluminum alloy), such that the end cover 216 is not easily deformed when being squeezed or collided. This enables the battery cell 20 to have higher structural strength, and the safety performance can also be improved. The end cover 216 may also be made of a variety of materials, such as copper, iron, aluminum, stainless steel, aluminum alloy, and plastic, which is not specifically limited in the embodiments of the present application. In some embodiments, the battery cell 20 further includes an insulating member, the insulating member being disposed on the inner side of the end cover 216. The insulating member may be configured to isolate the electrical connection component in the shell body 215 from the end cover 216 to reduce the risk of short circuit. Illustratively, the insulating member may be made of plastic, rubber, or the like.

The shell body 215 is a component configured to form the internal environment of the battery cell 20 in combination with the end cover 216. The formed internal environment may be used to accommodate the electrode assembly 22, the electrolytic solution, and other components. The shell body 215 and the end cover 216 may be independent components. An opening 2151 may be formed in the shell body 215, and at the opening 2151, the end cover 216 lids the opening 2151 to form the internal environment of the battery cell 20. Without limitation, the end cover 216 and the shell body 215 may be integrated. Specifically, the end cover 216 and the shell body 215 may form a common engaging surface before other components are placed in the shell, and when the interior of the shell body 215 needs to be encapsulated, the shell body 215 is lidded with the end cover 216. The shell body 215 may be in various shapes and dimensions, such as a rectangular parallelepiped, a cylinder, and a hexagonal prism. Specifically, the shape of the shell body 215 may be determined according to the specific shape and dimension of the electrode assembly 22. The shell body 215 may be made of various materials, such as copper, iron, aluminum, stainless steel, aluminum alloy, and plastic, which is not specially limited in the embodiments of the present application.

The electrode assembly 22 is a component where the electrochemical reaction occurs in the battery cell 20. One or more electrode assemblies 22 may be accommodated in the shell 21. The electrode assembly 22 is mainly formed by winding or stacking a positive electrode plate and a negative electrode plate, and a separation film is generally disposed between the positive electrode plate and the negative electrode plate. The portions of the positive electrode plate and the negative electrode plate that contain the active substance constitute the main body part of the electrode assembly 22, and the portions of the positive electrode plate and the negative electrode plate that do not contain the active substance each constitute a tab 221. The positive electrode tab and the negative electrode tab may be located together at one end of the main body part or respectively at two ends of the main body part. During the charging and discharging of the battery 100, the positive electrode active substance and the negative electrode active substance react with the electrolytic solution.

In some embodiments, referring to FIGs. 3 and 4, the battery cell 20 may further include an electrode terminal 23. The electrode terminal 23 is mounted on the shell 21 in an insulated manner, and the electrode terminal 23 is electrically connected to the electrode assembly 22 to output or input electric energy of the battery cell 20.

It should be noted that the electrode terminal 23 is mounted on the shell 21 in an insulated manner. That is, no electrical connection is formed between the electrode terminal 23 and the shell 21.

In FIGs. 3 and 4, the battery cell 20 includes two electrode terminals 23, and the two electrode terminals 23 are spaced apart from each other on the end cover 216. Correspondingly, each electrode assembly 22 is provided with two tabs 221, and the two tabs 221 have opposite polarities. The two electrode terminals 23 are electrically connected to the two tabs 221 of the electrode assembly 22, respectively, so as to achieve the input or output of the positive electrode and the negative electrode of the battery cell 20.

Illustratively, the electrode terminal 23 may also be made of various materials. For example, the electrode terminal 23 may be made of copper, iron, aluminum, steel, aluminum alloy, or the like.

Optionally, the electrode terminal 23 may be mounted on the shell 21 in various structures. Illustratively, in FIGs. 3 and 4, the two electrode terminals 23 are both mounted on the end cover 216 of the shell 21. Certainly, the structure of the battery cell 20 is not limited thereto. In other embodiments, the two electrode terminals 23 may also be both mounted on the shell body 215 of the shell 21. Similarly, for the two electrode terminals 23, the situation may also be that one electrode terminal 23 is mounted on the shell body 215 of the shell 21, and the other electrode terminal 23 is mounted on the end cover 216 of the shell 21.

In some embodiments, referring to FIGs. 3 and 4, the battery cell 20 may further include two current collecting members 24, and the two current collecting members 24 are both disposed in the shell 21. Each current collecting member 24 is configured to connect one electrode terminal 23 and tabs 221 with the same polarity in a plurality of electrode assemblies 22, so as to achieve the electrical connection between the electrode terminal 23 and the electrode assembly 22, which is beneficial to facilitating assembly between the tab 221 and the electrode terminal 23.

Illustratively, the current collecting member 24 may be made of various materials. For example, the current collecting member 24 may be made of copper, iron, aluminum, steel, aluminum alloy, or the like.

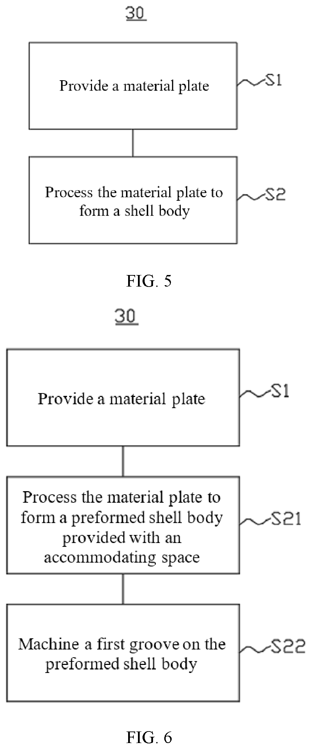

Referring to FIG. 5, FIG. 5 is a schematic block diagram of a method 30 for manufacturing a shell body according to some embodiments of the present application. The embodiments of the present application provide a method 30 for manufacturing a shell body. The method 30 for manufacturing the shell body includes:
step S1: providing a material plate 31; and
step S2: processing the material plate 31 to form a shell body 215.

The shell body 215 is provided with a pressure relief groove 2111, and the shell body 215 is capable of cracking along at least part of the pressure relief groove 2111 during pressure relief to release pressure inside the shell body 215.

The material plate 31 is a blank material used to manufacture the shell body 215. The material plate 31 may be of a sheet-like structure, to facilitate subsequent processing of the material plate 31 into the shell body 215.

The shell body 215 is provided with the pressure relief groove 2111, and the pressure relief groove 2111 plays a role of pressure relief, and is configured to enable the shell body 215 to crack along the pressure relief groove 2111 when the internal pressure or temperature of the battery cell 20 reaches a burst pressure, to release pressure inside the battery cell 20. The pressure relief groove 2111 may be processed at any time. The pressure relief groove 2111 may be a groove in various shapes, such as a circular arc shape, an H shape, a U shape, an annular shape, or the like. The pressure relief groove 2111 may be processed and formed in various ways, such as stamping, cold heading, or the like.

The shell body 215 manufactured by the method 30 for manufacturing the shell body is provided with the pressure relief groove 2111, and when the internal pressure or temperature of the shell body 215 reaches a burst pressure, the shell body 215 is capable of cracking along at least part of the pressure relief groove 2111, thereby releasing pressure inside the shell body 215. In the method 30 for manufacturing the shell body, the pressure relief groove 2111 is directly formed on the shell body 215 without welding, which avoids liquid leakage caused by welding defects and is beneficial to improving the service life of the battery cell 20.

Referring to FIG. 6, FIG. 6 is a schematic block diagram of a method 30 for manufacturing a shell body according to some other embodiments of the present application. In some other embodiments, the pressure relief groove 2111 includes a first groove 21112. Processing the material plate 31 to form the shell body 215 includes:
step S21: processing the material plate 31 to form a preformed shell body 2152 provided with an accommodating space; and
step S22: machining the first groove 21112 on the preformed shell body 2152.

Processing the material plate 31 to form the shell body 215 may be subdivided as follows: First processing the material plate 31 to form the preformed shell body 2152 provided with the accommodating space, and then machining the first groove 21112 on the preformed shell body 2152.

The pressure relief groove 2111 includes the first groove 21112, and the residual thickness of the shell body 215 at a position where the first groove 21112 is located is the smallest. During pressure relief, the shell body 215 is most prone to cracking from the position where the first groove 21112 is located, to release pressure inside the shell body 215.

The first groove 21112 may be a groove in various shapes, such as a circular arc shape, an H shape, a U shape, an annular shape, or the like. The first groove 21112 may be processed and formed in various ways, such as stamping, cold heading, or the like.

The preformed shell body 2152 is provided with an accommodating space having an opening 2151 at one end, the accommodating space is configured to accommodate the electrode assembly 22, and the end cover 216 may be connected to the preformed shell body 2152 and close the opening 2151. The difference between the preformed shell body 2152 and the shell body 215 lies in that the first groove 21112 has not been machined on the preformed shell body 2152, but the first groove 21112 has been machined on the shell body 215.

When the shell body 215 is manufactured, the material plate 31 is first processed to form the preformed shell body 2152 with the accommodating space, and then the first groove 21112 is machined on the preformed shell body 2152, thereby avoiding the impact of the processing of the shell body 215 on the precision of the first groove 21112, such that the first groove 21112 exhibits a relatively high precision. When the battery cell 20 undergoes thermal runaway, the first groove 21112 is capable of cracking in time for pressure relief, which is beneficial to improving the reliability of the battery cell 20.

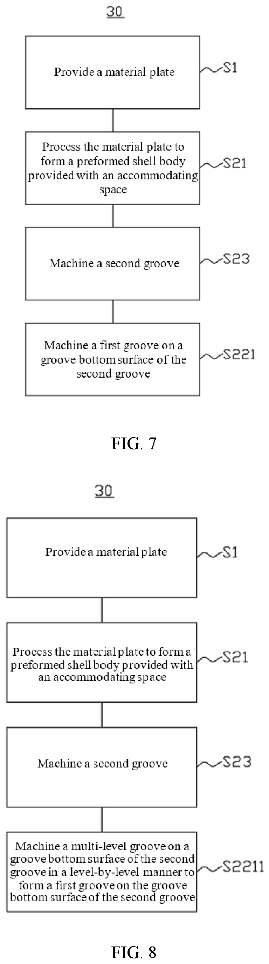

Referring to FIG. 7, FIG. 7 is a schematic block diagram of a method 30 for manufacturing a shell body according to still some other embodiments of the present application. In still some other embodiments, the pressure relief groove 2111 further includes a second groove 21111. Processing the material plate 31 to form the shell body 215 further includes:
step S23: machining a second groove 21111.

Machining the first groove 21112 on the preformed shell body 2152 includes:
step S221: machining the first groove 21112 on a groove bottom surface of the second groove 21111.

The pressure relief groove 2111 includes the first groove 21112 and the second groove 21111, and the first groove 21112 is disposed on the groove bottom surface of the second groove 21111. In this case, the pressure relief groove 2111 is a multi-level groove. When the pressure relief groove 2111 is a multi-level groove, the second groove 21111 is machined first, and then the first groove 21112 is machined on the groove bottom surface of the second groove 21111.

The second groove 21111 may be a groove in various shapes, such as a circular arc shape, an H shape, a U shape, an annular shape, or the like. The second groove 21111 may be processed and formed in various ways, such as stamping, cold heading, or the like.

During processing, the second groove 21111 is machined first, and finally the first groove 21112 is machined on the groove bottom surface of the second groove 21111. Processing the first groove 21112 is the last step in the manufacturing of the entire shell body 215, and the precision of the first groove 21112 is not easily affected by other processing steps, such that the first groove 21112 exhibits a relatively high precision. When the battery cell 20 undergoes thermal runaway, the first groove 21112 is capable of cracking in time for pressure relief, which is beneficial to improving the reliability of the battery cell 20. By processing the first groove 21112 and the second groove 21111 separately, it is beneficial to reducing the forming force applied during one processing, and it is beneficial to reducing the risk that the material plate 31 or the preformed shell body 2152 is damaged during the processing. In addition, when the first groove 21112 is processed, the second groove 21111 can also play a buffering role to a certain extent, such that the preformed shell body 2152 is not easily deformed due to factors such as local material extrusion during the process of processing the first groove 21112, which is beneficial to improving the yield of the shell body 215, thereby improving the service life and reliability of the battery cell 20.

Referring to FIG. 8, FIG. 8 is a schematic block diagram of a method 30 for manufacturing a shell body according to also some other embodiments of the present application. In also some other embodiments, machining the first groove 21112 on the groove bottom surface of the second groove 21111 includes:
step S2211: machining a multi-level groove on the groove bottom surface of the second groove 21111 in a level-by-level manner to form the first groove 21112 on the groove bottom surface of the second groove 21111.

In the embodiment shown in FIG. 8, the first groove 21112 is a multi-level groove. In this case, a first-level groove may be first machined on the groove bottom surface of the second groove 21111, then a second-level groove is machined on the groove bottom surface of the first groove 21112, then a third-level groove is machined on the groove bottom surface of the second-level groove, and so on. A next-level groove is machined on the groove bottom surface of a previous-level groove until the multi-level groove is completely machined. Taking the first groove 21112 being a two-level groove as an example, a first-level groove may be first machined on the groove bottom surface of the second groove 21111, and then a second-level groove is machined on the groove bottom surface of the first-level groove, to form the first groove 21112.

The first groove 21112 is a multi-level groove. By machining the multi-level groove on the groove bottom surface of the second groove 21111 in a level-by-level manner to form the first groove 21112, it is beneficial to reducing the forming force applied during one processing, and it is beneficial to reducing the risk that the preformed shell body 2152 is damaged during the processing.

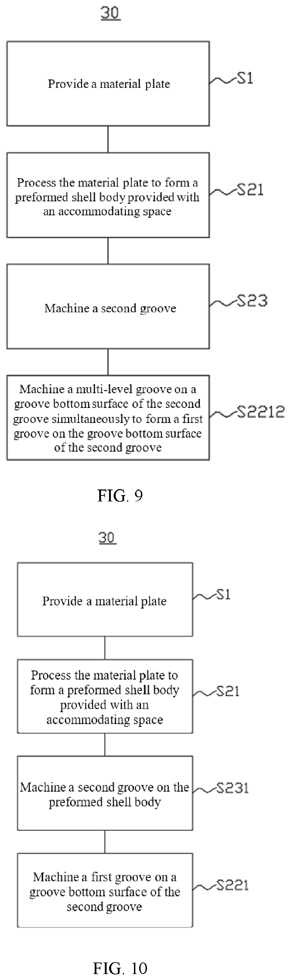

Referring to FIG. 9, FIG. 9 is a schematic block diagram of a method 30 for manufacturing a shell body according to yet some other embodiments of the present application. In yet some other embodiments, machining the first groove 21112 on the groove bottom surface of the second groove 21111 includes:
step S2212: machining a multi-level groove on the groove bottom surface of the second groove 21111 simultaneously to form the first groove 21112 on the groove bottom surface of the second groove 21111.

In the embodiment shown in FIG. 9, the first groove 21112 is a multi-level groove. In this case, the multi-level groove may be simultaneously machined on the groove bottom surface of the second groove 21111. For example, the multi-level groove may be simultaneously stamped on the groove bottom surface of the second groove 21111 to form the first groove 21112. For another example, the multi-level groove may be simultaneously etched on the groove bottom surface of the second groove 21111 to form the first groove 21112.

The first groove 21112 is a multi-level groove. By machining the multi-level groove on the groove bottom surface of the second groove 21111 simultaneously to form the first groove 21112, it is beneficial to reducing production processes, reduce processing equipment, and lower processing costs.

Referring to FIG. 10, FIG. 10 is a schematic block diagram of a method 30 for manufacturing a shell body according to further still some other embodiments of the present application. In further still some other embodiments, after processing the material plate 31 to form the preformed shell body 2152 provided with the accommodating space, the second groove 21111 is machined on the preformed shell body 2152.

"After processing the material plate 31 to form the preformed shell body 2152 provided with the accommodating space, the second groove 21111 is machined on the preformed shell body 2152" means that step S21 and step S23 are sequential, and step S21 is performed first and then step S23 is performed; that is, the material plate 31 is processed to form the preformed shell body 2152 provided with the accommodating space first, and then the second groove 21111 is machined. In this case, machining the second groove 21111 is specifically step S231: machining the second groove 21111 on the preformed shell body 2152.

When the shell body 215 is manufactured, the material plate 31 is first processed to form the preformed shell body 2152 with the accommodating space, then the second groove 21111 is machined on the preformed shell body 2152, and finally the first groove 21112 is machined on the groove bottom surface of the second groove 21111, thereby avoiding the impact of the processing of the shell body 215 on the precision of the second groove 21111 and the first groove 21112, such that the pressure relief groove 2111 exhibits a relatively high precision. When the battery cell 20 undergoes thermal runaway, the pressure relief groove 2111 is capable of cracking in time for pressure relief, which is beneficial to improving the reliability of the battery cell 20.

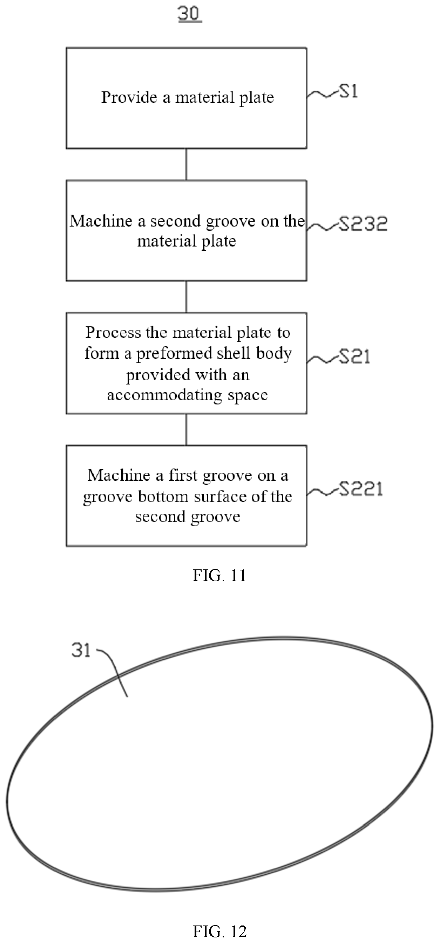

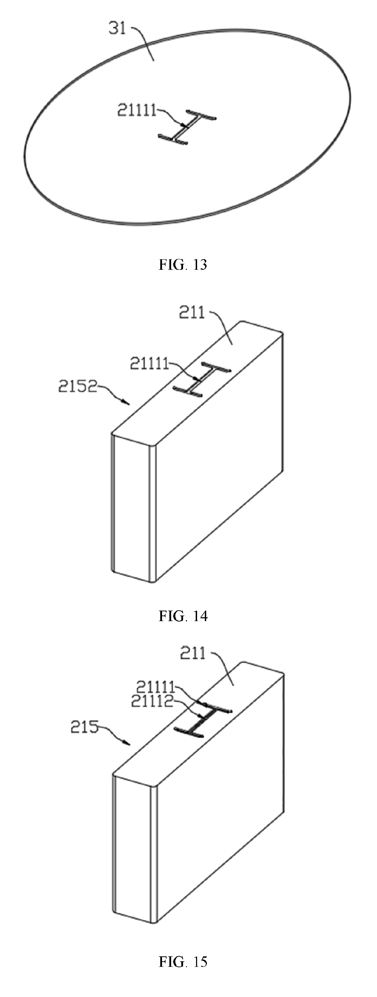

Referring to FIGs. 11, 12, 13, 14, and 15, FIG. 11 is a schematic block diagram of a method 30 for manufacturing a shell body according to further also some other embodiments of the present application. FIG. 12 is a schematic structural diagram of a material plate 31 according to some embodiments of the present application. FIG. 13 is a schematic structural diagram of a material plate 31 (processed with a second groove 21111) according to some embodiments of the present application. FIG. 14 is a schematic structural diagram of a preformed shell body 2152 according to some embodiments of the present application. FIG. 15 is a schematic structural diagram of the back of a shell body 215 according to some embodiments of the present application. Before processing the material plate 31 to form the preformed shell body 2152 provided with the accommodating space, the second groove 21111 is machined on the material plate 31.

"Before processing the material plate 31 to form the preformed shell body 2152 provided with the accommodating space, the second groove 21111 is machined on the material plate 31" means that step S21 and step S23 are sequential, and step S23 is performed first and then step S21 is performed; that is, the second groove 21111 is machined first, and then the material plate 31 is processed to form the preformed shell body 2152 provided with the accommodating space. In this case, machining the second groove 21111 is specifically step S232: machining the second groove 21111 on the material plate 31, and then processing the material plate 31 processed with the second groove 21111 to form the preformed shell body 2152 provided with the accommodating space.

Referring to FIG. 12, FIG. 12 shows the material plate 31 provided in step S1. Referring to FIG. 13, FIG. 13 shows the material plate 31 after step S232. In this case, the second groove 21111 has been machined on the material plate 31. Referring to FIG. 14, FIG. 14 shows the preformed shell body 2152 formed after step S21. In this case, the preformed shell body 2152 is already provided with the second groove 21111. Referring to FIG. 15, FIG. 15 shows the shell body 215 formed after step S221. In this case, the first groove 21112 has been machined on the shell body 215, and the manufacturing of the shell body 215 is completed.

When the shell body 215 is manufactured, the second groove 21111 is first machined on the material plate 31, and then the material plate 31 is processed to form the preformed shell body 2152. The preformed shell body 2152 is not easily affected by the processing of the second groove 21111, and the processed preformed shell body 2152 has a regular shape and a flat surface, which is beneficial to improving the processing precision of the preformed shell body 2152.

In some embodiments, during a process of processing the material plate 31 to form the preformed shell body 2152 provided with the accommodating space, the second groove 21111 is machined.

Processing the material plate 31 to form the preformed shell body 2152 may include a plurality of processing steps. For example, the material plate 31 may be first preprocessed to process the material plate 31 to form a blank shell body 215, then the second groove 21111 is machined on the blank shell body 215, and then the blank shell body 215 is processed to form the preformed shell body 2152. In this way, during the process of processing the material plate 31 to form the preformed shell body 2152 provided with the accommodating space, the second groove 21111 is machined.

During the process of processing the material plate 31 to form the preformed shell body 2152, machining the second groove 21111 is beneficial to reducing the impact of the processing of the second groove 21111 on the preformed shell body 2152, such that the preformed shell body 2152 exhibits a relatively high precision. In addition, during the process of processing the material plate 31 to form the preformed shell body 2152, the second groove 21111 is machined, and the impact of the processing of the preformed shell body 2152 on the second groove 21111 is also relatively small, which can improve the precision of the second groove 21111. In short, during the process of processing the material plate 31 to form the preformed shell body 2152, machining the second groove 21111 can take into account the precision of the preformed shell body 2152 and the precision of the second groove 21111.

In some embodiments, the volume of the second groove 21111 is greater than the volume of the first groove 21112.

When the volume of the first groove 21112 is measured, liquid may be added into the first groove 21112, and the volume of the first groove 21112 is determined based on the amount of the added liquid. When the volume of the second groove 21111 is measured, liquid may be added into the first groove 21112 and the second groove 21111, and the volume of the second groove 21111 may be calculated and determined by subtracting the amount of the liquid that can be accommodated by the first groove 21112 from the amount of the added liquid.

By making the volume of the second groove 21111 greater than the volume of the first groove 21112, the second groove 21111 can play a better buffering role during the process of processing the first groove 21112, thereby reducing the risk of deformation of the preformed shell body 2152 due to factors such as local material extrusion, which is beneficial to improving the yield of the shell body 215, thereby improving the service life and reliability of the battery cell 20.

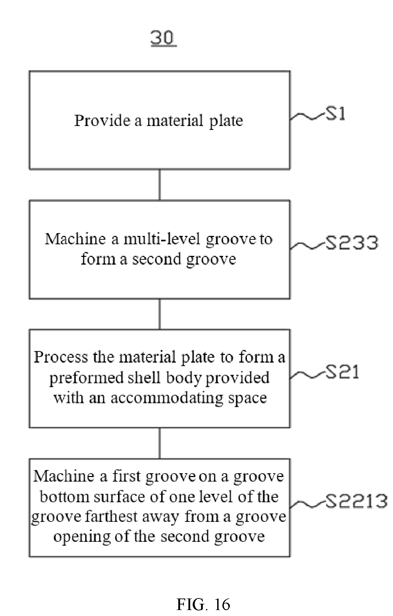

Referring to FIG. 16, FIG. 16 is a schematic block diagram of a method 30 for manufacturing a shell body according to further yet some other embodiments of the present application. In further yet some other embodiments, machining the second groove 21111 includes:
step S233: machining a multi-level groove to form the second groove 21111.

Machining the first groove 21112 on the groove bottom surface of the second groove 21111 includes:
step S2213: machining the first groove 21112 on a groove bottom surface of one level of the groove farthest away from a groove opening of the second groove 21111.

The second groove 21111 is a multi-level groove. When the second groove 21111 is processed, the multi-level groove may be machined in a level-by-level manner to form the second groove 21111. When the second groove 21111 is processed, the multi-level groove may also be machined simultaneously to form the second groove 21111.

In the case that the second groove 21111 is a multi-level groove, machining the first groove 21112 on the groove bottom surface of the second groove 21111 may be specifically: machining the first groove 21112 on the groove bottom surface of one level of the groove farthest away from the groove opening of the second groove 21111. For example, the second groove 21111 includes a two-level groove: a first-level groove and a second-level groove. The second-level groove is processed on a groove bottom surface of the first-level groove. In this case, the second-level groove is the level of the groove farthest away from the groove opening of the second groove 21111. Therefore, the first groove 21112 should be machined on the groove bottom surface of the second-level groove.

The second groove 21111 is a multi-level groove, and the first groove 21112 is formed on the groove bottom surface of the level of the groove farthest away from the groove opening of the second groove 21111. In this way, the second groove 21111 can provide a larger buffer space, thereby reducing the risk of deformation of the preformed shell body 2152 due to factors such as local material extrusion during the process of processing the first groove 21112, which is beneficial to improving the yield of the shell body 215, thereby improving the service life and reliability of the battery cell 20.

In some embodiments, machining the second groove 21111 includes: stamping the second groove 21111.

Forming the second groove 21111 by stamping is simple and convenient. In addition, in the case that the second groove 21111 is processed by stamping, a groove wall of the second groove 21111 may undergo cold work hardening (where the grain arrangement changes, leading to lattice distortion and deformation, reducing metal plasticity, and increasing material hardness). This enhances the ability of the second groove to resist an external impact, and the second groove is not easily damaged by the external impact. In this way, it is beneficial to reducing the risk of liquid leakage of the battery cell 20 and improving the service life of the battery cell 20.

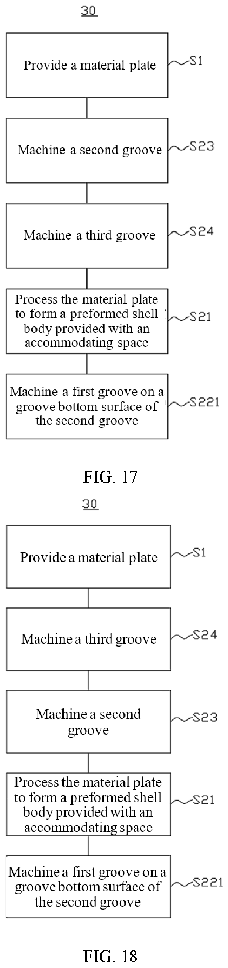

Referring to FIG. 17, FIG. 17 is a schematic block diagram of a method 30 for manufacturing a shell body according to still also some other embodiments of the present application. In still also some other embodiments, before machining the first groove 21112 on the groove bottom surface of the second groove 21111, processing the material plate 31 to form the shell body 215 further includes:
step S24: machining a third groove 2112.

The third groove 2112 and the pressure relief groove 2111 define a predetermined pressure relief zone 2113, and the third groove 2112 is configured to guide the predetermined pressure relief zone 2113 to at least partially flip open.

The third groove 2112 and the pressure relief groove 2111 define the predetermined pressure relief zone 2113, and during the pressure relief of the battery cell 20, the pressure relief groove 2111 cracks along an edge of the predetermined pressure relief zone 2113, such that the predetermined pressure relief zone 2113 can be opened for pressure relief.

The third groove 2112 plays a role in guiding the predetermined pressure relief zone 2113 to at least partially flip open. Optionally, the residual thickness of the shell body 215 at the position where the third groove 2112 is located is greater than the residual thickness of the shell body 215 at the position where the pressure relief groove 2111 is located. During the pressure relief of the battery cell 20, the pressure relief groove 2111 cracks first, allowing the fluid medium in the battery cell 20 to flow out for pressure relief. Then, under the action of the fluid medium, the predetermined pressure relief zone 2113 may flip outwards with the third groove 2112 as the rotation axis to open a larger pressure relief opening, thereby achieving rapid pressure relief.

The third groove 2112 may be a groove in various shapes, such as an arc-shaped groove, a straight line groove, or the like. The second groove 21111 may be processed and formed in various ways, such as stamping, cold heading, or the like.

It should be noted that there is no particular order between machining the second groove 21111 and machining the third groove 2112. The second groove 21111 may be machined first, and then the third groove 2112 is machined. Alternatively, the third groove 2112 may be machined first, and then the second groove 21111 is machined. Alternatively, the second groove 21111 and the third groove 2112 may be simultaneously machined.

During the pressure relief of the battery cell 20, the pressure relief groove 2111 cracks, allowing the fluid medium in the battery cell 20 to flow out for pressure relief. By providing the third groove 2112, the strength of the shell body 215 at the position of the third groove 2112 is weakened, such that the predetermined pressure relief zone 2113 flips open more easily under the action of the fluid medium. This not only can improve the probability of opening the predetermined pressure relief zone 2113, but also can improve the opening speed of the predetermined pressure relief zone 2113, thereby achieving rapid pressure relief, and reducing the risk of explosion and fire in the battery cell 20, which is beneficial to improving the reliability of the battery cell 20.

Referring to FIG. 17, in some embodiments, before machining the third groove 2112, the second groove 21111 is machined.

During processing, the second groove 21111 is machined first, and then the third groove 2112 is machined. The second groove 21111 can play a buffering role to a certain extent, and absorb the deformation of the material plate 31 caused by processing the third groove 2112.

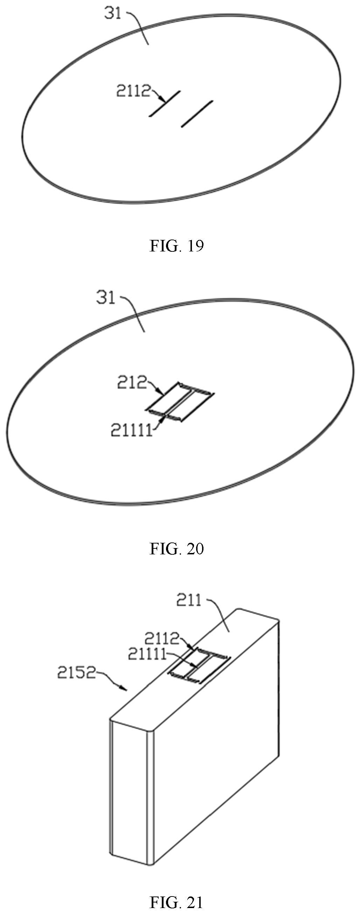

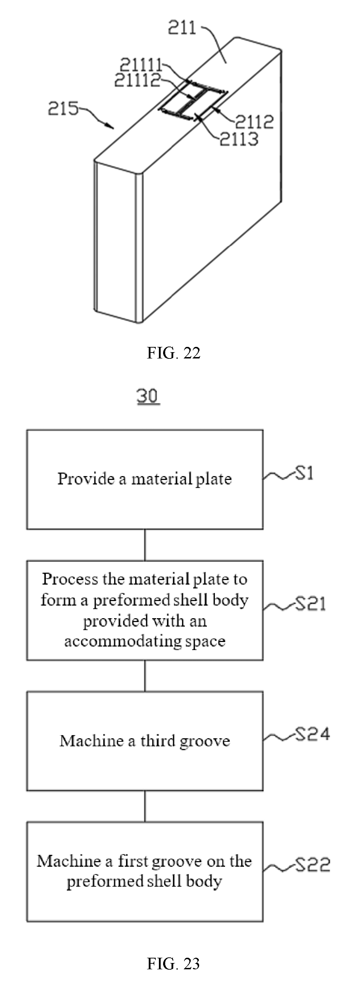

Referring to FIGs. 18, 19, 20, 21, and 22, FIG. 19 is a schematic structural diagram of a material plate 31 (processed with a third groove 2112) according to some embodiments of the present application. FIG. 20 is a schematic structural diagram of a material plate 31 (processed with a second groove 21111 and a third groove 2112) according to some embodiments of the present application. FIG. 21 is a schematic structural diagram of a preformed shell body 2152 (processed with a second groove 21111 and a third groove 2112) according to some embodiments of the present application. FIG. 22 is a schematic structural diagram of a shell body 215 (processed with a first groove 21112, a second groove 21111, and a third groove 2112) according to some embodiments of the present application. FIG. 18 is a schematic block diagram of a method 30 for manufacturing a shell body according to also yet some other embodiments of the present application. In also yet some other embodiments, before machining the second groove 21111, the third groove 2112 is machined.

Before processing the second groove 21111, the third groove 2112 is machined first, and the third groove 2112 can play a buffering role and absorb the deformation caused by processing the second groove 21111, such that the material plate 31 or the preformed shell body 2152 is not easily deformed greatly due to factors such as local material extrusion during the process of processing the second groove 21111, which is beneficial to improving the yield of the shell body 215, thereby improving the service life and reliability of the battery cell 20.

Referring to FIG. 19, FIG. 19 shows the material plate 31 after step S24. In this case, the third groove 2112 has been machined on the material plate 31. Referring to FIG. 20, FIG. 20 shows the material plate 31 after step S23. In this case, the second groove 21111 and the third groove 2112 have been machined on the material plate 31. Referring to FIG. 21, FIG. 21 shows the preformed shell body 2152 formed after step S21. In this case, the preformed shell body 2152 is already provided with the second groove 21111 and the third groove 2112. Referring to FIG. 22, FIG. 22 shows the shell body 215 formed after step S221. In this case, the first groove 21112 has been machined on the shell body 215, and the manufacturing of the shell body 215 is completed.

In some embodiments, the second groove 21111 and the third groove 2112 are simultaneously machined.

The second groove 21111 and the third groove 2112 may be simultaneously machined by stamping, or the second groove 21111 and the third groove 2112 may be simultaneously machined by etching.

By machining the second groove 21111 and the third groove 2112 simultaneously, the processing of the first groove 21112 and the processing of the third groove 2112 are not easily affected by each other, and the number of stations required for processing can be reduced, which is beneficial to improving the production efficiency.

Referring to FIGs. 19, 20, 21, and 22, in some embodiments, machining the third groove 2112 includes: machining two third grooves 2112, such that the second groove 21111 is located between the two third grooves 2112.

The two third grooves 2112 are spaced apart from each other, and the second groove 21111 is located between the two third grooves 2112.

By machining the two third grooves 2112, each third groove 2112 may correspond to at least one predetermined pressure relief zone 2113. During the pressure relief of the battery cell 20, each predetermined pressure relief zone 2113 flips open under the guidance of its corresponding third groove 2112, such that the battery cell 20 has a larger pressure relief area, which is beneficial to improving the pressure relief rate of the battery cell 20 and improving the reliability of the battery cell 20. In addition, during the subsequent process of processing the first groove 21112, both the two third grooves 2112 can play a buffering role to a certain extent, and absorb the deformation of the shell body 215 caused by processing the first groove 21112, which is beneficial to improving the precision of the shell body 215 and is beneficial to improving the reliability of the battery cell 20.

In some embodiments, the second groove 21111 and the third groove 2112 are machined on two surfaces disposed opposite to each other, respectively.

When both the second groove 21111 and the third groove 2112 are processed before the material plate 31 is formed into the preformed shell body 2152, the material plate 31 includes a first surface and a second surface disposed opposite to each other, the second groove 21111 is disposed on the first surface, and the third groove 2112 is disposed on the second surface.

When both the second groove 21111 and the third groove 2112 are processed after the material plate 31 is formed into the preformed shell body 2152, the shell body 215 is provided with a first wall 211, the first wall 211 includes a third surface and a fourth surface disposed opposite to each other, the second groove 21111 is disposed on the third surface, and the third groove 2112 is disposed on the fourth surface.

When one of the second groove 21111 and the third groove 2112 is processed before the material plate 31 is formed into the preformed shell body 2152 and the other is processed after the material plate 31 is formed into the preformed shell body 2152, the processed shell body 215 is provided with a first wall 211, the first wall 211 includes a third surface and a fourth surface disposed opposite to each other, the second groove 21111 is disposed on the third surface, and the third groove 2112 is disposed on the fourth surface.

By providing the second groove 21111 and the third groove 2112 on two surfaces disposed opposite to each other, respectively, the second groove 21111 and the third groove 2112 are located on two sides of the material plate 31 or the first wall 211 of the preformed shell body 2152, respectively, thereby facilitating the processing of the second groove 21111 and the processing of the third groove 2112 on the two sides of the material plate 31 or the first wall 211 of the preformed shell body 2152, respectively, which is beneficial to reducing the mutual influence between the second groove 21111 and the third groove 2112 during the processing.

In some embodiments, the second groove 21111 and the third groove 2112 are machined on the same surface.

When both the second groove 21111 and the third groove 2112 are processed before the material plate 31 is formed into the preformed shell body 2152, the material plate 31 includes a first surface, and both the second groove 21111 and the third groove 2112 are disposed on the first surface.

When both the second groove 21111 and the third groove 2112 are processed after the material plate 31 is formed into the preformed shell body 2152, the shell body 215 is provided with a first wall 211, the first wall 211 includes a third surface, and both the second groove 21111 and the third groove 2112 are disposed on the third surface.

When one of the second groove 21111 and the third groove 2112 is processed before the material plate 31 is formed into the preformed shell body 2152 and the other is processed after the material plate 31 is formed into the preformed shell body 2152, the processed shell body 215 is provided with a first wall 211, the first wall 211 includes a third surface, and both the second groove 21111 and the third groove 2112 are disposed on the third surface.

The second groove 21111 and the third groove 2112 are disposed on the same surface, and the second groove 21111 and the third groove 2112 can be machined at one time during processing, reducing the number of movements of the material plate 31, which is beneficial to simplifying manufacturing.

Referring to FIG. 23, FIG. 23 is a schematic block diagram of a method 30 for manufacturing a shell body according to yet also some other embodiments of the present application. In yet also some other embodiments, before machining the first groove 21112 on the preformed shell body 2152, processing the material plate 31 to form the shell body 215 further includes:
step S24: machining a third groove 2112.

The third groove 2112 and the pressure relief groove 2111 define a predetermined pressure relief zone 2113, and the third groove 2112 is configured to guide the predetermined pressure relief zone 2113 to at least partially flip open.

During the pressure relief of the battery cell 20, the pressure relief groove 2111 cracks, allowing the fluid medium in the battery cell 20 to flow out for pressure relief. By providing the third groove 2112, the strength of the shell body 215 at the position of the third groove 2112 is weakened, such that the predetermined pressure relief zone 2113 flips open more easily under the action of the fluid medium. This not only can improve the probability of opening the predetermined pressure relief zone 2113, but also can improve the opening speed of the predetermined pressure relief zone 2113, thereby achieving rapid pressure relief, and reducing the risk of explosion and fire in the battery cell 20, which is beneficial to improving the reliability of the battery cell 20.

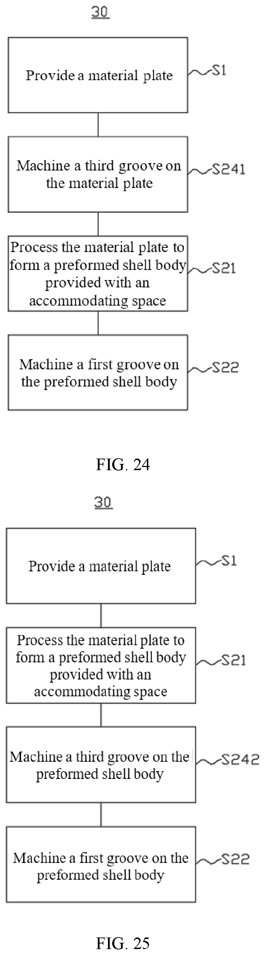

Referring to FIG. 24, FIG. 24 is a schematic block diagram of a method 30 for manufacturing a shell body according to also still some other embodiments of the present application. In also still some other embodiments, before processing the material plate 31 to form the preformed shell body 2152 provided with the accommodating space, the third groove 2112 is machined on the material plate 31.

"Before processing the material plate 31 to form the preformed shell body 2152 provided with the accommodating space, the third groove 2112 is machined on the material plate 31" means that step S21 and step S24 are sequential, and step S24 is performed first and then step S21 is performed; that is, the third groove 2112 is machined first, and then the material plate 31 is processed to form the preformed shell body 2152 provided with the accommodating space. In this case, machining the third groove 2112 is specifically step S241: machining the third groove 2112 on the material plate 31, and then processing the material plate 31 processed with the third groove 2112 to form the preformed shell body 2152 provided with the accommodating space.

When the shell body 215 is manufactured, the third groove 2112 is first machined on the material plate 31, and then the material plate 31 is processed to form the preformed shell body 2152. The preformed shell body 2152 is not easily affected by the processing of the third groove 2112, and the processed preformed shell body 2152 has a regular shape and a flat surface, which is beneficial to improving the processing precision of the preformed shell body 2152.

Referring to FIG. 25, FIG. 25 is a schematic block diagram of a method 30 for manufacturing a shell body according to yet further some other embodiments of the present application. In yet further some other embodiments, after processing the material plate 31 to form the preformed shell body 2152 provided with the accommodating space, the third groove 2112 is machined on the preformed shell body 2152.

"After processing the material plate 31 to form the preformed shell body 2152 provided with the accommodating space, the third groove 2112 is machined on the preformed shell body 2152" means that step S21 and step S24 are sequential, and step S21 is performed first and then step S24 is performed; that is, the material plate 31 is processed to form the preformed shell body 2152 provided with the accommodating space first, and then the third groove 2112 is machined. In this case, machining the third groove 2112 is specifically step S242: machining the third groove 2112 on the preformed shell body 2152.

When the shell body 215 is manufactured, the material plate 31 is first processed to form the preformed shell body 2152 with the accommodating space, and then the third groove 2112 is machined on the preformed shell body 2152, thereby avoiding the impact of the processing of the shell body 215 on the precision of the third groove 2112, which is beneficial to improving the guiding effect of the third groove 2112 on the flipping of the predetermined pressure relief zone 2113 during the pressure relief of the battery cell 20.

In some embodiments, during the process of processing the material plate 31 to form the preformed shell body 2152 provided with the accommodating space, the third groove 2112 is machined.

Processing the material plate 31 to form the preformed shell body 2152 may include a plurality of processing steps. For example, the material plate 31 may be first preprocessed to process the material plate 31 to form a blank shell body 215, then the third groove 2112 is machined on the blank shell body 215, and then the blank shell body 215 is processed to form the preformed shell body 2152. In this way, during the process of processing the material plate 31 to form the preformed shell body 2152 provided with the accommodating space, the third groove 2112 is machined.

During the process of processing the material plate 31 to form the preformed shell body 2152, machining the third groove 2112 is beneficial to reducing the impact of the processing of the third groove 2112 on the preformed shell body 2152, such that the preformed shell body 2152 exhibits a relatively high precision. In addition, during the process of processing the material plate 31 to form the preformed shell body 2152, the third groove 2112 is machined, and the impact of the processing of the preformed shell body 2152 on the third groove 2112 is also relatively small, which can improve the precision of the third groove 2112. In short, during the process of processing the material plate 31 to form the preformed shell body 2152, machining the third groove 2112 can take into account the precision of the preformed shell body 2152 and the precision of the third groove 2112.

In some embodiments, machining the third groove 2112 includes: stamping the third groove 2112.

Forming the third groove 2112 by stamping is simple and convenient. In addition, in the case that the third groove 2112 is processed by stamping, a groove wall of the third groove 2112 may undergo cold work hardening (where the grain arrangement changes, leading to lattice distortion and deformation, reducing metal plasticity, and increasing material hardness). This enhances the ability of the third groove to resist an external impact, and the third groove is not easily damaged by the external impact. In this way, it is beneficial to reducing the risk of liquid leakage of the battery cell 20 and improving the service life of the battery cell 20.

In some embodiments, the volume of the third groove 2112 is greater than the volume of the first groove 21112.

When the volume of the first groove 21112 is measured, liquid may be added into the first groove 21112, and the volume of the first groove 21112 is determined based on the amount of the added liquid.

When the volume of the third groove 2112 is measured, liquid may be added into the third groove 2112, and the volume of the third groove 2112 is determined based on the amount of the added liquid.

By making the volume of the third groove 2112 greater than the volume of the first groove 21112, the third groove 2112 can play a better buffering role during the process of processing the first groove 21112, and absorb the deformation of the preformed shell body 2152 caused by processing the first groove 21112, thereby reducing the risk of deformation of the preformed shell body 2152 due to factors such as local material extrusion, which is beneficial to improving the yield of the shell body 215, thereby improving the service life and reliability of the battery cell 20.

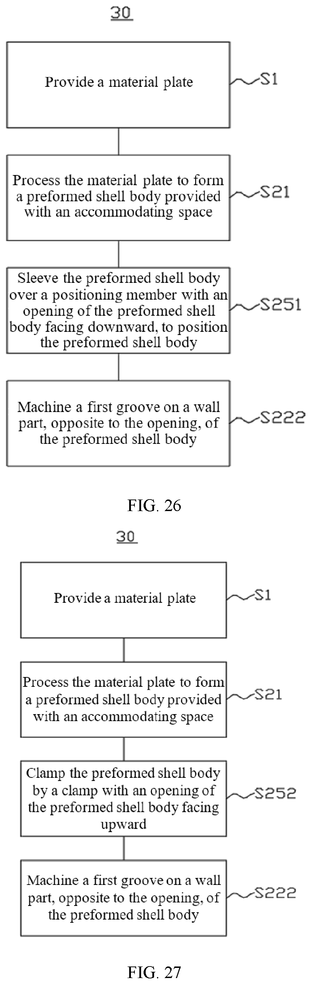

Referring to FIG. 26, FIG. 26 is a schematic block diagram of a method 30 for manufacturing a shell body according to also further some other embodiments of the present application. Before machining the first groove 21112 on the preformed shell body 2152, processing the material plate 31 to form the shell body 215 further includes:
step S251: sleeving the preformed shell body 2152 over a positioning member with an opening 2151 of the preformed shell body facing downward, to position the preformed shell body 2152.

Machining the first groove 21112 on the preformed shell body 2152 includes:
step S222: machining the first groove 21112 on a first wall 211, opposite to the opening 2151, of the preformed shell body 2152.

Before processing the first groove 21112 on the preformed shell body 2152, the preformed shell body 2152 is sleeved over the positioning member with the opening 2151 of the preformed shell body facing downward, to achieve the positioning of the preformed shell body 2152, thereby reducing the risk of shift of the preformed shell body 2152 during the processing. Then, the first groove 21112 is machined on the first wall 211 of the preformed shell body 2152. The first wall 211 is a wall part, opposite to the opening 2151, of the preformed shell body 2152.

During processing, the preformed shell body 2152 is sleeved over the positioning member with the opening 2151 of the preformed shell body facing downward, to achieve the quick positioning of the preformed shell body 2152, thereby facilitating the processing of the first groove 21112 on the first wall 211, opposite to the opening 2151, of the preformed shell body 2152, and reducing the risk of shift of the preformed shell body 2152 during the processing, which is beneficial to improving the processing precision of the first groove 21112.

Referring to FIG. 27, FIG. 27 is a schematic block diagram of a method 30 for manufacturing a shell body according to still further some other embodiments of the present application. In still further some other embodiments, before machining the first groove 21112 on the preformed shell body 2152, processing the material plate 31 to form the shell body 215 further includes:
step S252: clamping the preformed shell body 2152 by a clamp with an opening 2151 of the preformed shell body 2152 facing upward.

Machining the first groove 21112 on the preformed shell body 2152 includes:
step S222: machining the first groove 21112 on a first wall 211, opposite to the opening 2151, of the preformed shell body 2152.

Before processing the first groove 21112 on the preformed shell body 2152, the preformed shell body 2152 is clamped and positioned by the clamp with the opening 2151 of the preformed shell body 2152 facing upward, thereby reducing the risk of shift of the preformed shell body 2152 during the processing. Then, the first groove 21112 is machined on the first wall 211 of the preformed shell body 2152. The first wall 211 is a wall part, opposite to the opening 2151, of the preformed shell body 2152.

During processing, the preformed shell body 2152 is clamped by the clamp, such that the opening 2151 of the preformed shell body 2152 faces upward, to achieve the positioning of the preformed shell body 2152, thereby facilitating the processing of the first groove 21112 on the first wall 211, opposite to the opening 2151, of the preformed shell body 2152, and reducing the risk of shift of the preformed shell body 2152 during the processing, which is beneficial to improving the processing precision of the first groove 21112.

In some embodiments, machining the first groove 21112 on the preformed shell body 2152 includes: stamping the first groove 21112 on the preformed shell body 2152.

Forming the first groove 21112 by stamping is simple and convenient. In addition, in the case that the first groove 21112 is processed by stamping, a groove wall of the first groove 21112 may undergo cold work hardening (where the grain arrangement changes, leading to lattice distortion and deformation, reducing metal plasticity, and increasing material hardness). This enhances the ability of the first groove to resist an external impact, and the first groove is not easily damaged by the external impact. In this way, it is beneficial to reducing the risk of liquid leakage of the battery cell 20.

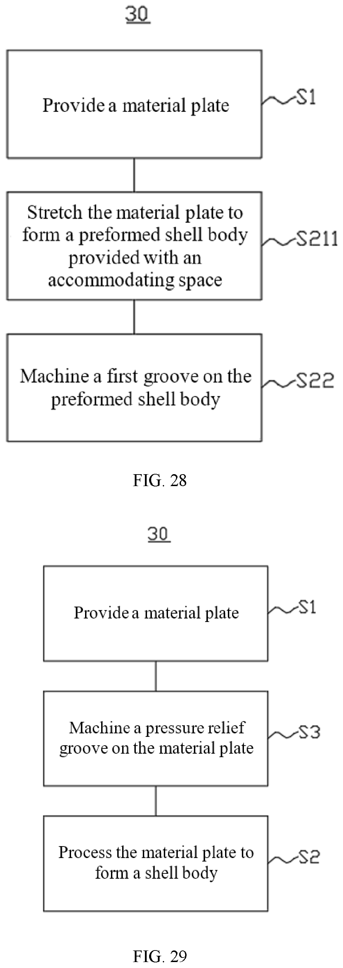

Referring to FIG. 28, FIG. 28 is a schematic block diagram of a method 30 for manufacturing a shell body according to further yet still some other embodiments of the present application. In further yet still some other embodiments, processing the material plate 31 to form the preformed shell body 2152 provided with the accommodating space includes:
step S211: stretching the material plate 31 to form the preformed shell body 2152 provided with the accommodating space.

The material plate 31 may be stretched to form the preformed shell body 2152 at one time, or may be stretched to form the preformed shell body 2152 at a plurality of times. When the material plate 31 is stretched a plurality of times to form the preformed shell body 2152, the preformed shell body 2152 exhibits higher precision.

Processing the material plate 31 to form the preformed shell body 2152 by stretching is simple in direction, low-cost, and easy to operate.

Referring to FIG. 29, FIG. 29 is a schematic block diagram of a method 30 for manufacturing a shell body according to further still yet some other embodiments of the present application. In further still yet some other embodiments, before processing the material plate 31 to form the shell body 215, the method 30 for manufacturing the shell body further includes:
step S3: machining a pressure relief groove 2111 on the material plate 31.

In the embodiment shown in FIG. 29, the pressure relief groove 2111 is completely machined on the material plate 31, and then the material plate 31 processed with the pressure relief groove 2111 is processed to form the shell body 215.

The pressure relief groove 2111 is first machined on the material plate 31, and then the material plate 31 processed with the pressure relief groove 2111 is processed to form the shell body 215. In this way, the impact of processing the pressure relief groove 2111 on the shell body 215 can be avoided, such that the shell body 215 exhibits a relatively high precision, and the shell body 215 has a regular shape and a flat surface, which is beneficial to improving the service life of the battery cell 20.

In some embodiments, the material plate 31 is of an elliptical structure.

The material plate 31 is of an elliptical structure, and in this way, it is more material-saving when the material plate 31 is processed to form the shell body 215.

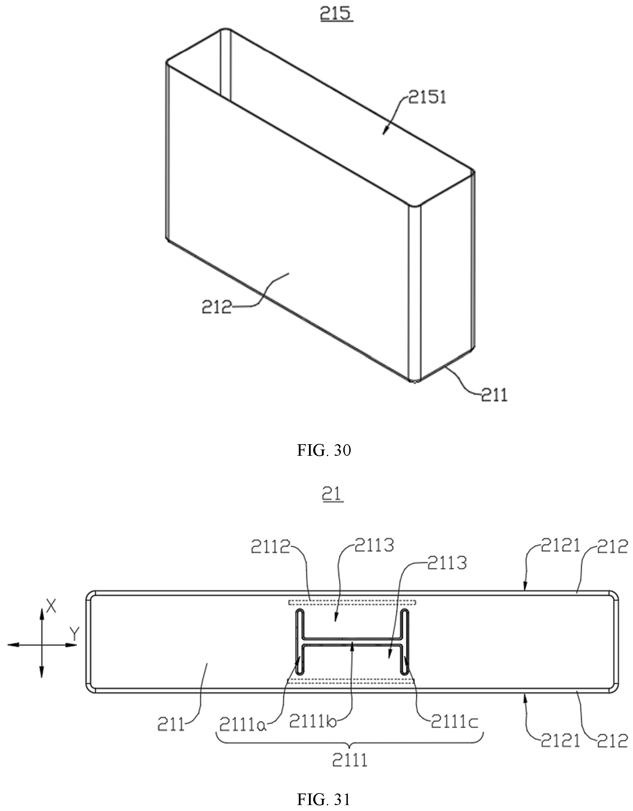

Referring to FIG. 30, FIG. 30 is a schematic structural diagram of the front of a shell body 215 according to some embodiments of the present application. The embodiments of the present application further provide a shell body 215. The shell body 215 is manufactured according to the above method 30 for manufacturing the shell body.

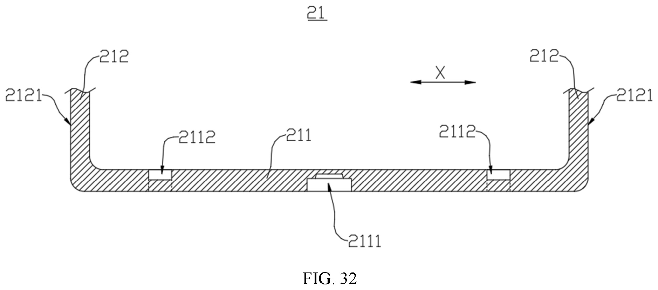

Referring to FIGs. 30, 31, and 32, in some embodiments, FIG. 31 is a schematic bottom view of a shell body 215 according to some embodiments of the present application. FIG. 32 is a cross-sectional view of a shell body 215 according to some embodiments of the present application. The shell body 215 is provided with a first wall 211 and a second wall 212 connected to each other, the pressure relief groove 2111 is disposed on the first wall 211, and the second wall 212 is located on one side of the first wall 211 in a first direction. The first wall 211 is further provided with a third groove 2112, and in the first direction, the second wall 212 is provided with a first outer surface 2121 facing away from the interior of the shell body 215. The third groove 2112 is located between the first outer surface 2121 and the pressure relief groove 2111.

The pressure relief groove 2111 plays a role of pressure relief, and is configured to enable the first wall 211 to crack along the pressure relief groove 2111 when the internal pressure or temperature of the battery cell 20 reaches a burst pressure, to release pressure inside the battery cell 20.

Optionally, the pressure relief groove 2111 may be disposed on one side, facing the interior of the shell body 215, of the first wall 211, or may be disposed on one side, facing away from the interior of the shell body 215, of the first wall 211.

Optionally, the third groove 2112 and the pressure relief groove 2111 may be disposed on the same side of the first wall 211, or may be disposed on two sides of the first wall 211, respectively. Illustratively, the pressure relief groove 2111 is disposed on one side, facing away from the interior of the shell body 215, of the first wall 211, and the third groove 2112 is disposed on one side, facing the interior of the shell body 215, of the first wall 211.

Illustratively, both the pressure relief groove 2111 and the third groove 2112 are formed by a stamping process.

The shell body 215 is provided with a first wall 211 and a second wall 212 connected to each other; that is, the first wall 211 and the second wall 212 are two adjacent and connected walls of the shell body 215, respectively. Illustratively, in FIGs. 30, 31, and 32, the shell body 215 is of a rectangular parallelepiped structure, and the first wall 211 and the second wall 212 are two walls perpendicular to each other. It should be noted that, in some embodiments, if the shell body 215 is of a cylindrical structure, the first wall 211 is one wall at one end in the axial direction of the shell body 215, and the second wall 212 is a side wall disposed in an enclosing manner around the first wall 211.

Illustratively, in FIGs. 30, 31, and 32, the shell body 215 is of a rectangular parallelepiped structure, and correspondingly, the first wall 211 is of a rectangular structure. The first direction may be an X direction shown in FIGs. 31 and 32. In the embodiment shown in FIGs. 32 and 32, the first direction X is the width direction of the first wall 211.

The third groove 2112 is located between the first outer surface 2121 and the pressure relief groove 2111, that is, in the first direction, the pressure relief groove 2111, the third groove 2112, and the first outer surface 2121 of the second wall 212 are structures sequentially arranged in the first direction, such that the pressure relief groove 2111 and the first outer surface 2121 of the second wall 212 are located on two sides of the third groove 2112 in the first direction, respectively.

The first outer surface 2121 is a surface, facing away from the interior of the shell body 215 in the first direction, of the second wall 212.

The shell 21 is provided with a first wall 211 and a second wall 212 connected to each other, and the first wall 211 is provided with a pressure relief groove 2111, such that during the pressure relief of the battery cell 20, the first wall 211 is capable of cracking along the pressure relief groove 2111 to release the internal pressure of the battery cell 20, where the first wall 211 is further provided with a third groove 2112, the third groove 2112 is located between the pressure relief groove 2111 and the first outer surface 2121 in the first direction, and the third groove 2112 can play a certain separation role. In one aspect, the third groove 2112 can absorb the excess material extruded from the pressure relief groove 2111 during the forming process of the pressure relief groove 2111, so as to mitigate the occurrence of local arching of the first outer surface 2121 of the second wall 212 or the local arching of the first wall 211 caused by local material extrusion during the process of processing the pressure relief groove 2111 on the first wall 211. Therefore, problems such as an increase in the local dimension of the battery cell 20 in the first direction or a decrease in the flatness of the first wall 211 can be reduced, thereby improving the dimensional consistency of the shell body 215, which is beneficial to improving the production quality of the battery cell 20. In another aspect, when the battery cell 20 is subjected to acting forces of internal and external impacts and deformed, the deformation energy of the battery cell 20 can also be absorbed by the third groove 2112, such that the third groove 2112 can play a buffering role between the pressure relief groove 2111 and the second wall 212, so as to protect the zone of the first wall 211 provided with the pressure relief groove 2111 to a certain extent. Therefore, phenomena such as deformation or damage in the zone of the first wall 211 provided with the pressure relief groove 2111 can be effectively reduced when the battery cell 20 is subjected to acting forces of internal and external impacts, thereby mitigating the situation of pre-actuation and pressure relief of the battery cell 20 during use, which is beneficial to improving the use reliability and service life of the battery cell 20.

Referring to FIGs. 30, 31, and 32, in some embodiments, the third groove 2112 and the pressure relief groove 2111 define a predetermined pressure relief zone 2113, and the third groove 2112 is configured to guide the predetermined pressure relief zone 2113 to at least partially flip open.

The third groove 2112 and the pressure relief groove 2111 define the predetermined pressure relief zone 2113, and during the pressure relief of the battery cell 20, the pressure relief groove 2111 cracks along an edge of the predetermined pressure relief zone 2113, such that the predetermined pressure relief zone 2113 can be opened for pressure relief. The third groove 2112 plays a role in guiding the predetermined pressure relief zone 2113 to at least partially flip open. Optionally, the residual thickness of the shell body 215 at the position where the third groove 2112 is located is greater than the residual thickness of the shell body 215 at the position where the pressure relief groove 2111 is located. During the pressure relief of the battery cell 20, the pressure relief groove 2111 cracks first, allowing the fluid medium in the battery cell 20 to flow out for pressure relief. Then, under the action of the fluid medium, the predetermined pressure relief zone 2113 may flip outwards with the third groove 2112 as the rotation axis to open a larger pressure relief opening, thereby achieving rapid pressure relief. The third groove 2112 may be a groove in various shapes, such as an arc-shaped groove, a straight line groove, or the like. The second groove 21111 may be processed and formed in various ways, such as stamping, cold heading, or the like.

By providing the third groove 2112, the strength of the first wall 211 at the position of the third groove 2112 is weakened, such that the predetermined pressure relief zone 2113 flips open more easily under the action of the fluid medium. This not only can improve the probability of opening the predetermined pressure relief zone 2113, but also can improve the opening speed of the predetermined pressure relief zone 2113, thereby achieving rapid pressure relief, and reducing the risk of explosion and fire in the battery cell 20, which is beneficial to improving the reliability of the battery cell 20.

Referring to FIGs. 30, 31, and 32, in some embodiments, the pressure relief groove 2111 and the third groove 2112 are located on two surfaces, disposed opposite to each other, of the first wall 211, respectively.

The first wall 211 includes a third surface and a fourth surface disposed opposite to each other, where the third surface faces the interior of the shell body 215, and the fourth surface faces away from the interior of the shell body 215. The third groove 2112 may be disposed on the third surface, and the pressure relief groove 2111 may be disposed on the fourth surface. Certainly, in some other embodiments, the third groove 2112 may be disposed on the fourth surface, and the pressure relief groove 2111 may be disposed on the third surface.

By providing the pressure relief groove 2111 and the third groove 2112 on two surfaces, disposed opposite to each other, of the first wall 211, respectively, the pressure relief groove 2111 and the third groove 2112 are located on two sides of the first wall 211, respectively, thereby facilitating the processing of the pressure relief groove 2111 and the processing of the third groove 2112 on the two sides of the first wall 211, respectively, which is beneficial to reducing the mutual influence between the pressure relief groove 2111 and the third groove 2112 during the processing.

Referring to FIGs. 30, 31, and 32, in some embodiments, in the first direction, the pressure relief groove 2111 at least partially overlaps with a projection of the third groove 2112.

The projection of the third groove 2112 in the first direction covers at least part of the pressure relief groove 2111.

By arranging the pressure relief groove 2111 and the projection, disposed in the first direction, of the third groove 2112 to at least partially overlap, the pressure relief groove 2111 and the third groove 2112 are provided with an overlapping zone in the first direction. Therefore, in one aspect, the absorption effect of the third groove 2112 on the excess material can be improved, thereby reducing the phenomenon of an increase in the local dimension of the battery cell 20 or the poor flatness of the first wall 211 caused by local material extrusion during the process of processing the pressure relief groove 2111 on the first wall 211 of the shell body 215. In another aspect, when the battery cell 20 is subjected to acting forces of internal and external impacts and deformed, the absorption effect of the pressure relief groove 2111 on the deformation energy of the battery cell 20 can be improved, thereby improving the buffering effect of the third groove 2112 between the pressure relief groove 2111 and the second wall 212. Therefore, phenomena such as deformation or damage in the zone of the first wall 211 provided with the pressure relief groove 2111 can be effectively reduced when the battery cell 20 is subjected to acting forces of internal and external impacts.

In some embodiments, two ends of the extension direction of the projection of the third groove 2112 in the thickness direction of the first wall 211 extend beyond two ends of the pressure relief groove 2111, respectively.

The third groove 2112 may extend in a second direction. Referring to FIG. 31, the second direction may be a Y direction shown in the figure. In some embodiments, two ends of the third groove 2112 in the second direction extend out of the pressure relief groove 2111; that is, the length of the third groove 2112 in the second direction is greater than the length of the pressure relief groove 2111 in the second direction, and two ends of the third groove 2112 extend out of two ends of the pressure relief groove 2111, respectively.

By making two ends of the extension direction of the projection of the third groove 2112 in the thickness direction of the first wall 211 extend beyond two ends of the pressure relief groove 2111, respectively, the separation effect of the third groove 2112 between the pressure relief groove 2111 and the second wall 212 can be improved, thereby improving the absorption effect of the third groove 2112 on the excess material extruded during the forming process of the pressure relief groove 2111, and improving the blocking effect of the third groove 2112 on the deformation energy of the battery cell 20 when the battery cell 20 is subjected to acting forces of internal and external impacts.

Referring to FIGs. 30, 31, and 32, in some embodiments, the pressure relief groove 2111 includes a plurality of groove segments, the plurality of groove segments are connected, and the plurality of groove segments and the third groove 2112 jointly define at least one predetermined pressure relief zone 2113.

The pressure relief groove 2111 includes the plurality of groove segments. Each groove segment may be a straight line groove, or may be an arc-shaped groove, or some groove segments may be straight line grooves, and some groove segments may be arc-shaped grooves. The plurality of groove segments are connected to form the pressure relief groove 2111, and the plurality of groove segments and the third groove 2112 jointly define at least one predetermined pressure relief zone 2113.

The plurality of groove segments and the third groove 2112 jointly define the predetermined pressure relief zone 2113, and the first wall 211 is capable of cracking along the plurality of groove segments during the pressure relief of the battery cell 20, thereby opening the predetermined pressure relief zone 2113 to release the internal pressure of the battery cell 20. Moreover, the connection position of two groove segments is weaker, and is more prone to cracking and opening the predetermined pressure relief zone 2113 for pressure relief, thereby further improving the pressure relief area and pressure relief rate of the battery cell 20.

Referring to FIGs. 30, 31, and 32, in some embodiments, the plurality of groove segments include a first groove segment 2111a, a second groove segment 2111b, and a third groove segment 2111c. The first groove segment 2111a and the third groove segment 2111c are disposed opposite to each other, and the second groove segment 2111b connects the first groove segment 2111a and the third groove segment 2111c. The first groove segment 2111a, the second groove segment 2111b, and the third groove segment 2111c jointly define at least one predetermined pressure relief zone 2113.

The first groove segment 2111a and the third groove segment 2111c are spaced apart from each other and at least partially opposite to each other. Optionally, both the first groove segment 2111a and the third groove segment 2111c extend in the first direction.

The second groove segment 2111b connects the first groove segment 2111a and the third groove segment 2111c; that is, the second groove segment 2111b is located between the first groove segment 2111a and the third groove segment 2111c, and two ends of the second groove segment 2111b are connected to the first groove segment 2111a and the third groove segment 2111c, respectively. Certainly, in other embodiments, two ends of the second groove segment 2111b may extend out of the first groove segment 2111a and the third groove segment 2111c, respectively.

Referring to FIG. 31, the extension line of the first groove segment 2111a intersects with the third groove 2112, and the extension line of the third groove segment 2111c intersects with the third groove 2112. A closed zone jointly defined in an enclosing manner by the first groove segment 2111a, the extension line, facing the third groove 2112, of the first groove segment 2111a, the second groove segment 2111b, the third groove segment 2111c, the extension line, facing the third groove 2112, of the third groove segment 2111c, and the third groove 2112 is the predetermined pressure relief zone 2113. That is, the first groove segment 2111a, the second groove segment 2111b, and the third groove segment 2111c are structures disposed along the edge of the predetermined pressure relief zone 2113, such that the predetermined pressure relief zone 2113 can be opened with the first groove segment 2111a, the second groove segment 2111b, and the third groove segment 2111c as the boundary. That is, the predetermined pressure relief zone 2113 is formed in the zone defined in an enclosing manner by the first groove segment 2111a, the second groove segment 2111b, and the third groove segment 2111c, such that the part of the first wall 211 located in the predetermined pressure relief zone 2113 can be opened with the first groove segment 2111a, the second groove segment 2111b, and the third groove segment 2111c as the boundary during the pressure relief of the battery cell 20, thereby releasing the internal pressure of the battery cell 20.

The plurality of groove segments include a first groove segment 2111a, a second groove segment 2111b, and a third groove segment 2111c, and the second groove segment 2111b connects the first groove segment 2111a and the third groove segment 2111c, such that the first wall 211 is capable of cracking along the first groove segment 2111a, the second groove segment 2111b, and the third groove segment 2111c during the pressure relief of the battery cell 20, thereby opening the predetermined pressure relief zone 2113 to release the internal pressure of the battery cell 20. The connection position of the first groove segment 2111a and the second groove segment 2111b as well as the connection position of the first groove segment 2111a and the third groove segment 2111c are weaker, and are more prone to cracking and opening the predetermined pressure relief zone 2113 for pressure relief, thereby further improving the pressure relief area and pressure relief rate of the battery cell 20.

Referring to FIGs. 30, 31, and 32, in some embodiments, the connection position of the first groove segment 2111a and the second groove segment 2111b is offset from two ends of the first groove segment 2111a, and the connection position of the third groove segment 2111c and the second groove segment 2111b is offset from two ends of the third groove segment 2111c, such that the predetermined pressure relief zone 2113 is formed on two sides of the second groove segment 2111b.

The connection position of the second groove segment 2111b and the first groove segment 2111a is offset from two ends of the first groove segment 2111a, that is, the second groove segment 2111b is connected between the two ends of the first groove segment 2111a. Similarly, the connection position of the third groove segment 2111c and the second groove segment 2111b is offset from two ends of the third groove segment 2111c, that is, the second groove segment 2111b is connected between the two ends of the third groove segment 2111c, such that the shape of the first groove 21112 jointly formed by the first groove segment 2111a, the second groove segment 2111b, and the third groove segment 2111c is of an approximately "H"-shaped structure.

By arranging the connection position of the first groove segment 2111a and the second groove segment 2111b to be located between two ends of the first groove segment 2111a, and arranging the connection position of the third groove segment 2111c and the second groove segment 2111b to be located between two ends of the third groove segment 2111c, the first groove segment 2111a, the second groove segment 2111b, and the third groove segment 2111c form a structure similar to an "H" shape, such that the predetermined pressure relief zone 2113 can be formed on two sides of the second groove segment 2111b of the pressure relief groove 2111, and two predetermined pressure relief zones 2113 can be opened in a symmetrical manner for pressure relief during the pressure relief of the battery cell 20, which is beneficial to further increasing the pressure relief effect of the battery cell 20, thereby effectively improving the pressure relief rate of the battery cell 20.

The embodiments of the present application further provide a battery cell 20. The battery cell 20 includes the above shell body 215.

The embodiments of the present application further provide a battery 100. The battery 100 includes the above battery cell 20.

The embodiments of the present application further provide an electric device. The electric device includes the above battery cell 20.

According to some embodiments of the present application, refer to FIGs. 5 to 27.

The embodiments of the present application provide a method 30 for manufacturing a shell body. The method 30 for manufacturing the shell body includes:
step S1: providing a material plate 31;
step S24: machining a third groove 2112;
step S23: machining a second groove 21111;
step S21: processing the material plate 31 to form a preformed shell body 2152 provided with an accommodating space; and
step S221: machining the first groove 21112 on a groove bottom surface of the second groove 21111.

The shell body 215 manufactured by the method 30 for manufacturing the shell body is provided with the pressure relief groove 2111, and when the internal pressure or temperature of the shell body 215 reaches a burst pressure, the shell body 215 is capable of cracking along at least part of the pressure relief groove 2111, thereby releasing pressure inside the shell body 215. In the method 30 for manufacturing the shell body, the pressure relief groove 2111 is directly formed on the shell body 215 without welding, which avoids liquid leakage caused by welding defects and is beneficial to improving the service life of the battery cell 20. When the shell body 215 is manufactured, the second groove 21111 is first machined on the material plate 31, and then the material plate 31 is processed to form the preformed shell body 2152. The preformed shell body 2152 is not easily affected by the processing of the second groove 21111, and the processed preformed shell body 2152 has a regular shape and a flat surface, which is beneficial to improving the processing precision of the preformed shell body 2152. During the pressure relief of the battery cell 20, the pressure relief groove 2111 cracks, allowing the fluid medium in the battery cell 20 to flow out for pressure relief. By providing the third groove 2112, the strength of the shell body 215 at the position of the third groove 2112 is weakened, such that the predetermined pressure relief zone 2113 flips open more easily under the action of the fluid medium. This not only can improve the probability of opening the predetermined pressure relief zone 2113, but also can improve the opening speed of the predetermined pressure relief zone 2113, thereby achieving rapid pressure relief, and reducing the risk of explosion and fire in the battery cell 20, which is beneficial to improving the reliability of the battery cell 20. When the shell body 215 is manufactured, the third groove 2112 is first machined on the material plate 31, and then the material plate 31 is processed to form the preformed shell body 2152. The preformed shell body 2152 is not easily affected by the processing of the third groove 2112, and the processed preformed shell body 2152 has a regular shape and a flat surface, which is beneficial to improving the processing precision of the preformed shell body 2152.

The residual thickness of the shell body 215 at a position where the first groove 21112 is located is the smallest. During pressure relief, the shell body 215 is most prone to cracking from the position where the first groove 21112 is located, to release pressure inside the shell body 215. When the shell body 215 is manufactured, the material plate 31 is first processed to form the preformed shell body 2152 with the accommodating space, and then the first groove 21112 is machined on the preformed shell body 2152, thereby avoiding the impact of the processing of the shell body 215 on the precision of the first groove 21112, such that the first groove 21112 exhibits a relatively high precision. When the battery cell 20 undergoes thermal runaway, the first groove 21112 is capable of cracking in time for pressure relief, which is beneficial to improving the reliability of the battery cell 20.

The pressure relief groove 2111 includes the first groove 21112 and the second groove 21111, and the first groove 21112 is disposed on the groove bottom surface of the second groove 21111. In this case, the pressure relief groove 2111 is a multi-level groove. During processing, the second groove 21111 is machined first, and finally the first groove 21112 is machined on the groove bottom surface of the second groove 21111. Processing the first groove 21112 is the last step in the manufacturing of the entire shell body 215, and the precision of the first groove 21112 is not easily affected by other processing steps, such that the first groove 21112 exhibits a relatively high precision. When the battery cell 20 undergoes thermal runaway, the first groove 21112 is capable of cracking in time for pressure relief, which is beneficial to improving the reliability of the battery cell 20. By processing the first groove 21112 and the second groove 21111 separately, it is beneficial to reducing the forming force applied during one processing, and it is beneficial to reducing the risk that the material plate 31 or the preformed shell body 2152 is damaged during the processing. In addition, when the first groove 21112 is processed, the second groove 21111 can also play a buffering role to a certain extent, such that the preformed shell body 2152 is not easily deformed due to factors such as local material extrusion during the process of processing the first groove 21112, which is beneficial to improving the yield of the shell body 215, thereby improving the service life and reliability of the battery cell 20.

The above are only preferred embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A method for manufacturing a shell body, comprising:
providing a material plate; and
processing the material plate to form a shell body, wherein the shell body is provided with a pressure relief groove, and the shell body is capable of cracking along at least part of the pressure relief groove during pressure relief to release pressure inside the shell body.

2. The method for manufacturing the shell body according to claim 1, wherein the pressure relief groove comprises a first groove;
processing the material plate to form the shell body comprises:
processing the material plate to form a preformed shell body provided with an accommodating space; and
machining the first groove on the preformed shell body.

3. The method for manufacturing the shell body according to claim 2, wherein the pressure relief groove further comprises a second groove;
processing the material plate to form the shell body further comprises:
machining the second groove;
machining the first groove on the preformed shell body comprises:
machining the first groove on a groove bottom surface of the second groove.

4. The method for manufacturing the shell body according to claim 3, wherein machining the first groove on the groove bottom surface of the second groove comprises:
machining a multi-level groove on the groove bottom surface of the second groove in a level-by-level manner to form the first groove on the groove bottom surface of the second groove.

5. The method for manufacturing the shell body according to claim 3, wherein machining the first groove on the groove bottom surface of the second groove comprises:
machining a multi-level groove on the groove bottom surface of the second groove simultaneously to form the first groove on the groove bottom surface of the second groove.

6. The method for manufacturing the shell body according to any one of claims 3 to 5, wherein after processing the material plate to form the preformed shell body provided with the accommodating space, the second groove is machined on the preformed shell body.

7. The method for manufacturing the shell body according to any one of claims 3 to 5, wherein before processing the material plate to form the preformed shell body provided with the accommodating space, the second groove is machined on the material plate.

8. The method for manufacturing the shell body according to any one of claims 3 to 5, wherein during a process of processing the material plate to form the preformed shell body provided with the accommodating space, the second groove is machined.

9. The method for manufacturing the shell body according to any one of claims 3 to 8, wherein a volume of the second groove is greater than a volume of the first groove.

10. The method for manufacturing the shell body according to any one of claims 3 to 9, wherein machining the second groove comprises:
machining a multi-level groove to form the second groove;
machining the first groove on the groove bottom surface of the second groove comprises:
machining the first groove on a groove bottom surface of one level of the groove farthest away from a groove opening of the second groove.

11. The method for manufacturing the shell body according to any one of claims 3 to 10, wherein machining the second groove comprises:
stamping the second groove.

12. The method for manufacturing the shell body according to any one of claims 3 to 5, wherein before machining the first groove on the groove bottom surface of the second groove, processing the material plate to form the shell body further comprises:
machining a third groove, wherein
the third groove and the pressure relief groove define a predetermined pressure relief zone, and the third groove is configured to guide the predetermined pressure relief zone to at least partially flip open.

13. The method for manufacturing the shell body according to claim 12, wherein before machining the third groove, the second groove is machined.

14. The method for manufacturing the shell body according to claim 12, wherein before machining the second groove, the third groove is machined.

15. The method for manufacturing the shell body according to claim 12, wherein the second groove and the third groove are simultaneously machined.

16. The method for manufacturing the shell body according to any one of claims 12 to 15, wherein machining the third groove comprises:
machining two third grooves, such that the second groove is located between the two third grooves.

17. The method for manufacturing the shell body according to any one of claims 12 to 16, wherein the second groove and the third groove are machined on two surfaces disposed opposite to each other, respectively.

18. The method for manufacturing the shell body according to any one of claims 12 to 16, wherein the second groove and the third groove are machined on a same surface.

19. The method for manufacturing the shell body according to any one of claims 2 to 11, wherein before machining the first groove on the preformed shell body, processing the material plate to form the shell body further comprises:
machining a third groove, wherein
the third groove and the pressure relief groove define a predetermined pressure relief zone, and the third groove is configured to guide the predetermined pressure relief zone to at least partially flip open.

20. The method for manufacturing the shell body according to claim 19, wherein before processing the material plate to form the preformed shell body provided with the accommodating space, a third groove is machined on the material plate.

21. The method for manufacturing the shell body according to claim 19, wherein after processing the material plate to form the preformed shell body provided with the accommodating space, a third groove is machined on the preformed shell body.

22. The method for manufacturing the shell body according to claim 19, wherein during a process of processing the material plate to form the preformed shell body provided with the accommodating space, the third groove is machined.

23. The method for manufacturing the shell body according to any one of claims 19 to 22, wherein machining the third groove comprises:
stamping the third groove.

24. The method for manufacturing the shell body according to any one of claims 19 to 23, wherein a volume of the third groove is greater than a volume of the first groove.

25. The method for manufacturing the shell body according to any one of claims 2 to 24, wherein before machining the first groove on the preformed shell body, processing the material plate to form the shell body further comprises:
sleeving the preformed shell body over a positioning member with an opening of the preformed shell body facing downward, to position the preformed shell body;
machining the first groove on the preformed shell body comprises:
machining the first groove on a first wall, opposite to the opening, of the preformed shell body.

26. The method for manufacturing the shell body according to any one of claims 2 to 24, wherein before machining the first groove on the preformed shell body, processing the material plate to form the shell body further comprises:
clamping the preformed shell body by a clamp with an opening of the preformed shell body facing upward;
machining the first groove on the preformed shell body comprises:
machining the first groove on a first wall, opposite to the opening, of the preformed shell body.

27. The method for manufacturing the shell body according to any one of claims 2 to 26, wherein machining the first groove on the preformed shell body comprises:
stamping the first groove on the preformed shell body.

28. The method for manufacturing the shell body according to any one of claims 2 to 27, wherein processing the material plate to form the preformed shell body provided with the accommodating space comprises:
stretching the material plate to form the preformed shell body provided with the accommodating space.

29. The method for manufacturing the shell body according to claim 1, wherein before processing the material plate to form the shell body, the method for manufacturing the shell body further comprises:
machining the pressure relief groove on the material plate.

30. The method for manufacturing the shell body according to any one of claims 1 to 29, wherein the material plate is of an elliptical structure.

31. A shell body, manufactured by the method for manufacturing the shell body according to any one of claims 1 to 30.

32. The shell body according to claim 31, wherein the shell body is provided with a first wall and a second wall connected to each other, the pressure relief groove is disposed on the first wall, and the second wall is located on one side of the first wall in a first direction;
the first wall is further provided with a third groove, in the first direction, the second wall is provided with a first outer surface facing away from an interior of the shell body, and the third groove is located between the first outer surface and the pressure relief groove.

33. The shell body according to claim 32, wherein the third groove and the pressure relief groove define a predetermined pressure relief zone, and the third groove is configured to guide the predetermined pressure relief zone to at least partially flip open.

34. The shell body according to claim 33, wherein the pressure relief groove and the third groove are located on two surfaces, disposed opposite to each other, of the first wall, respectively.

35. The shell body according to claim 34, wherein in the first direction, the pressure relief groove at least partially overlaps with a projection of the third groove.

36. The shell body according to any one of claims 33 to 35, wherein two ends of an extension direction of a projection of the third groove in a thickness direction of the first wall extend beyond two ends of the pressure relief groove, respectively.

37. The shell body according to any one of claims 33 to 36, wherein the pressure relief groove comprises a plurality of groove segments, the plurality of groove segments are connected, and the plurality of groove segments and the third groove jointly define at least one predetermined pressure relief zone.

38. The shell body according to claim 37, wherein the plurality of groove segments comprise a first groove segment, a second groove segment, and a third groove segment, the first groove segment and the third groove segment are disposed opposite to each other, the second groove segment connects the first groove segment and the third groove segment, and the first groove segment, the second groove segment, the third groove segment, and the third groove jointly define at least one predetermined pressure relief zone.

39. The shell body according to claim 38, wherein a connection position of the first groove segment and the second groove segment is offset from two ends of the first groove segment, and a connection position of the third groove segment and the second groove segment is offset from two ends of the third groove segment, such that the predetermined pressure relief zone is formed on two sides of the second groove segment.

40. A battery cell, comprising the shell body according to any one of claims 31 to 39.

41. A battery, comprising the battery cell according to claim 40.

42. An electric device, comprising the battery cell according to claim 40.
